# EUROPEAN PATENT APPLICATION

(11) **EP 4 615 053 A1**
(43) Date of publication of application: **10.09.2025**
(21) Application number: 23884794.1
(22) Date of filing: 30.10.2023
(51) Int. Cl.: H04W 36/00, H04W 52/14

(54) **INFORMATION TRANSMISSION METHOD AND APPARATUS, TERMINAL, AND NETWORK SIDE DEVICE**

(30) Priority: 03.11.2022 CN 202211371969
(71) Applicant: Vivo Mobile Communication Co., Ltd., Dongguan, Guangdong 523863 (CN)
(72) Inventor: JIANG, Wei, Dongguan, Guangdong 523863 (CN); LIN, Zhipeng, Dongguan, Guangdong 523863 (CN); PAN, Xueming, Dongguan, Guangdong 523863 (CN); MO, Yitao, Dongguan, Guangdong 523863 (CN)
(74) Representative: Michalski Hüttermann & Partner Patentanwälte mbB
(86) International application number: PCT/CN2023/127479
(87) International publication number: WO 2024/093862

(57) **Abstract**

This application discloses an information transmission method and apparatus, a terminal, and a network-side device, pertaining to the field of communication technologies. The method of embodiments of this application includes: sending, by a terminal, terminal assistance information related to waveform switching; and performing, by the terminal, the waveform switching; where the terminal assistance information includes at least one of the following: first information related to a first power headroom corresponding to a first waveform; first delta information, where the first delta information is used to indicate a delta of first parameters corresponding to different waveforms; second delta information, where the second delta information is used to indicate a delta of first parameters corresponding to different modulation schemes of a same waveform; a maximum transmit power of the terminal corresponding to the first waveform; information related to a second parameter; and second information related to a maximum permissible exposure MPE corresponding to the first waveform; where the first waveform is a waveform other than a second waveform; and the second waveform is a waveform actually used for physical uplink channel transmission of the terminal.

## Description

### CROSS-REFERENCE TO RELATED APPLICATIONS

This application claims priority to Chinese Patent Application No. 202211371969.0, filed in China on November 3, 2022, which is incorporated herein by reference in its entirety.

### TECHNICAL FIELD

This application pertains to the field of communications technologies, and specifically relates to an information transmission method and apparatus, a terminal, and a network-side device.

### BACKGROUND

Waveform switching is an important uplink enhancement technology. Through dynamic switching between a cyclic prefix (Cyclic Prefix, CP)-orthogonal frequency division multiplexing (Orthogonal Frequency Division Multiplexing, OFDM) waveform and a discrete Fourier transform (Discrete Fourier Transform, DFT)-s-OFDM waveform, a terminal can select an appropriate waveform for transmission under corresponding channel state conditions. In the related art, a transmission waveform is configured by radio resource control (Radio Resource Control, RRC), and the transmission waveform is updated during RRC reconfiguration. Without RRC reconfiguration, transmission needs to be performed based on a related waveform configuration, resulting in a slow update rate and inability to effectively improve transmission performance.

Therefore, the approach to dynamic waveform switching needs consideration. Although dynamic waveform switching itself can be achieved through dynamic indication, if the network relies solely on a difference between a current uplink transmit power and a maximum transmit power of the UE reported in the power headroom report (Power Headroom Report, PHR), the network cannot properly schedule uplink transmission resources for the user equipment (User Equipment, UE) or control an uplink power of the UE to maximize resource and power utilization, thus failing to achieve dynamic waveform switching.

### SUMMARY

Embodiments of this application provide an information transmission method and apparatus, a terminal, and a network-side device, which can resolve the problem that dynamic waveform switching cannot be realized in related technologies.

According to a first aspect, an information transmission method is provided, including:
sending, by a terminal, terminal assistance information related to waveform switching; and
performing, by the terminal, the waveform switching; where
the terminal assistance information includes at least one of the following:
   first information related to a first power headroom corresponding to a first waveform;
   first delta information, where the first delta information is used to indicate a delta of first parameters corresponding to different waveforms;
   second delta information, where the second delta information is used to indicate a delta of first parameters corresponding to different modulation schemes of a same waveform, and the first parameter includes at least one of a power headroom PH, a maximum transmit power of the terminal, and a maximum power reduction MPR;
   a maximum transmit power of the terminal corresponding to the first waveform;
   information related to a second parameter, where the second parameter includes at least one of an MPR, an additional maximum power reduction A-MPR, and a power management maximum power reduction P-MPR; and
   second information related to a maximum permissible exposure MPE corresponding to the first waveform; where
   the first waveform is a waveform other than a second waveform; and the second waveform is a waveform actually used for physical uplink channel transmission of the terminal.

According to a second aspect, an information transmission method is provided, including:
obtaining, by a network-side device, terminal assistance information related to waveform switching; and
controlling, by the network-side device, the terminal based on the terminal assistance information to perform waveform switching; where
the terminal assistance information includes at least one of the following:
   first information related to a first power headroom corresponding to a first waveform;
   first delta information, where the first delta information is used to indicate a delta of first parameters corresponding to different waveforms;
   second delta information, where the second delta information is used to indicate a delta of first parameters corresponding to different modulation schemes of a same waveform, and the first parameter includes at least one of a power headroom PH, a maximum transmit power of the terminal, and a maximum power reduction MPR;
   a maximum transmit power of the terminal corresponding to the first waveform;
   information related to a second parameter, where the second parameter includes at least one of an MPR, an additional maximum power reduction A-MPR, and a power management maximum power reduction P-MPR; and
   second information related to a maximum permissible exposure MPE corresponding to the first waveform; where
   the first waveform is a waveform other than a second waveform; and the second waveform is a waveform actually used for physical uplink channel transmission of the terminal.

According to a third aspect, an information transmission apparatus is provided, including:
a first sending module, configured to send terminal assistance information related to waveform switching; and
a first execution module, configured to perform waveform switching; where
the terminal assistance information includes at least one of the following:
   first information related to a first power headroom corresponding to a first waveform;
   first delta information, where the first delta information is used to indicate a delta of first parameters corresponding to different waveforms;
   second delta information, where the second delta information is used to indicate a delta of first parameters corresponding to different modulation schemes of a same waveform, and the first parameter includes at least one of a power headroom PH, a maximum transmit power of the terminal, and a maximum power reduction MPR;
   a maximum transmit power of the terminal corresponding to the first waveform;
   information related to a second parameter, where the second parameter includes at least one of an MPR, an additional maximum power reduction A-MPR, and a power management maximum power reduction P-MPR; and
   second information related to a maximum permissible exposure MPE corresponding to the first waveform; where
   the first waveform is a waveform other than a second waveform; and the second waveform is a waveform actually used for physical uplink channel transmission of the terminal.

According to a fourth aspect, an information transmission apparatus is provided, including:
a first obtaining module, configured to obtain terminal assistance information related to waveform switching; and
a second execution module, configured to control the terminal based on the terminal assistance information to perform waveform switching; where
the terminal assistance information includes at least one of the following:
   first information related to a first power headroom corresponding to a first waveform;
   first delta information, where the first delta information is used to indicate a delta of first parameters corresponding to different waveforms;
   second delta information, where the second delta information is used to indicate a delta of first parameters corresponding to different modulation schemes of a same waveform, and the first parameter includes at least one of a power headroom PH, a maximum transmit power of the terminal, and a maximum power reduction MPR;
   a maximum transmit power of the terminal corresponding to the first waveform;
   information related to a second parameter, where the second parameter includes at least one of an MPR, an additional maximum power reduction A-MPR, and a power management maximum power reduction P-MPR; and
   second information related to a maximum permissible exposure MPE corresponding to the first waveform; where
   the first waveform is a waveform other than a second waveform; and the second waveform is a waveform actually used for physical uplink channel transmission of the terminal.

According to a fifth aspect, a terminal is provided, where the terminal includes a processor, a memory, and a program or instructions stored in the memory and capable of running on the processor, and when the program or instructions are executed by the processor, the steps of the method according to the first aspect are implemented.

According to a sixth aspect, a terminal is provided, including a processor and a communication interface, where the communication interface is configured to terminal assistance information related to waveform switching; and the processor is configured to perform waveform switching; where
the terminal assistance information includes at least one of the following:
first information related to a first power headroom corresponding to a first waveform;
first delta information, where the first delta information is used to indicate a delta of first parameters corresponding to different waveforms;
second delta information, where the second delta information is used to indicate a delta of first parameters corresponding to different modulation schemes of a same waveform, and the first parameter includes at least one of a power headroom PH, a maximum transmit power of the terminal, and a maximum power reduction MPR;
a maximum transmit power of the terminal corresponding to the first waveform;
information related to a second parameter, where the second parameter includes at least one of an MPR, an additional maximum power reduction A-MPR, and a power management maximum power reduction P-MPR; and
second information related to a maximum permissible exposure MPE corresponding to the first waveform; where
the first waveform is a waveform other than a second waveform; and the second waveform is a waveform actually used for physical uplink channel transmission of the terminal.

According to a seventh aspect, a network-side device is provided, where the network-side device includes a processor and a memory, where a program or instructions capable of running on the processor are stored in the memory. When the program or the instructions are executed by the processor, the steps of the method according to the second aspect are implemented.

According to an eighth aspect, a network-side device is provided and includes a processor and a communication interface, where the communication interface is configured to obtain terminal assistance information related to waveform switching; and the processor is configured to control the terminal based on the terminal assistance information to perform waveform switching; where
the terminal assistance information includes at least one of the following:
first information related to a first power headroom corresponding to a first waveform;
first delta information, where the first delta information is used to indicate a delta of first parameters corresponding to different waveforms;
second delta information, where the second delta information is used to indicate a delta of first parameters corresponding to different modulation schemes of a same waveform, and the first parameter includes at least one of a power headroom PH, a maximum transmit power of the terminal, and a maximum power reduction MPR;
a maximum transmit power of the terminal corresponding to the first waveform;
information related to a second parameter, where the second parameter includes at least one of an MPR, an additional maximum power reduction A-MPR, and a power management maximum power reduction P-MPR; and
second information related to a maximum permissible exposure MPE corresponding to the first waveform; where
the first waveform is a waveform other than a second waveform; and the second waveform is a waveform actually used for physical uplink channel transmission of the terminal.

According to a ninth aspect, an information transmission system is provided, including a terminal and a network-side device, the terminal is configured to execute the steps of the method according to the first aspect; and the network-side device is configured to execute the steps of the method according to the second aspect.

According to a tenth aspect, a readable storage medium is provided, where a program or instructions are stored in the readable storage medium, and in a case that the program or the instructions are executed by a processor, the steps of the method according to the first aspect are implemented, or the steps of the method according to the second aspect are implemented.

According to an eleventh aspect, a chip is provided, where the chip includes a processor and a communication interface, the communication interface is coupled to the processor, and the processor is configured to run a program or instructions to implement the method according to the first aspect or the method according to the second aspect.

According to a twelfth aspect, a computer program/program product is provided, where the computer program/program product is stored in a storage medium, and the computer program/program product is executed by at least one processor to implement the method according to the first aspect or the second aspect.

In the embodiments of the application, the terminal sends terminal the assistance information related to waveform switching; and the terminal performs waveform switching; where the terminal assistance information includes at least one of the following: first information related to a first power headroom corresponding to a first waveform; first delta information, where the first delta information is used to indicate a delta of first parameters corresponding to different waveforms; second delta information, where the second delta information is used to indicate a delta of first parameters corresponding to different modulation schemes of a same waveform, and the first parameter includes at least one of a power headroom PH, a maximum transmit power of the terminal, and a maximum power reduction MPR; a maximum transmit power of the terminal corresponding to the first waveform; information related to a second parameter, where the second parameter includes at least one of an MPR, an additional maximum power reduction A-MPR, and a power management maximum power reduction P-MPR; and second information related to a maximum permissible exposure MPE corresponding to the first waveform; where the first waveform is a waveform other than a second waveform; and the second waveform is a waveform actually used for physical uplink channel transmission of the terminal. That is, in the embodiments of this application, the terminal provides the network-side device with information such as the information related to the first power headroom corresponding to the first waveform, which is a waveform other than the one actually used for physical uplink channel transmission, enabling the network-side device to obtain information related to waveforms other than the currently used transmission waveform. This allows the network-side device, when using different waveforms, to control the terminal based on the assistance information to perform waveform switching, thereby achieving the purpose of reasonably scheduling uplink transmission for the terminal or reasonably controlling an uplink power of the UE. In other words, based on the terminal assistance information, the network-side device can be assisted in achieving proper scheduling of uplink transmission of the terminal or proper control of the uplink power of the terminal, thereby effectively improving transmission performance.

### BRIEF DESCRIPTION OF DRAWINGS

FIG. 1 illustrates a structural diagram of a communication system to which the embodiments of this application are applicable;
FIG. 2 illustrates a first schematic diagram of MAC CE for transmitting PHR in the related art;
FIG. 3 illustrates a second schematic diagram of MAC CE for transmitting PHR in the related art;
FIG. 4 illustrates a first flowchart of an information transmission method according to an embodiment of this application;
FIG. 5 illustrates a first schematic diagram of MAC CE for transmitting PHR according to an embodiment of this application;
FIG. 6 illustrates a second schematic diagram of MAC CE for transmitting PHR according to an embodiment of this application;
FIG. 7 illustrates a third schematic diagram of MAC CE for transmitting PHR according to an embodiment of this application;
FIG. 8 illustrates a fourth schematic diagram of MAC CE for transmitting PHR according to an embodiment of this application;
FIG. 9 illustrates a fifth schematic diagram of MAC CE for transmitting PHR according to an embodiment of this application;
FIG. 10 illustrates a sixth schematic diagram of MAC CE for transmitting PHR according to an embodiment of this application;
FIG. 11 illustrates a seventh schematic diagram of MAC CE for transmitting PHR according to an embodiment of this application;
FIG. 12 illustrates an eighth schematic diagram of MAC CE for transmitting PHR according to an embodiment of this application;
FIG. 13 illustrates a ninth schematic diagram of MAC CE for transmitting PHR according to an embodiment of this application;
FIG. 14 illustrates a tenth schematic diagram of MAC CE for transmitting PHR according to an embodiment of this application;
FIG. 15 illustrates an eleventh schematic diagram of MAC CE for transmitting PHR according to an embodiment of this application;
FIG. 16 illustrates a twelfth schematic diagram of MAC CE for transmitting PHR according to an embodiment of this application;
FIG. 17 illustrates a thirteenth schematic diagram of MAC CE for transmitting PHR according to an embodiment of this application;
FIG. 18 illustrates a fourteenth schematic diagram of MAC CE for transmitting PHR according to an embodiment of this application;
FIG. 19 illustrates a fifteenth schematic diagram of MAC CE for transmitting PHR according to an embodiment of this application;
FIG. 20 illustrates a sixteenth schematic diagram of MAC CE for transmitting PHR according to an embodiment of this application;
FIG. 21 illustrates a seventeenth schematic diagram of MAC CE for transmitting PHR according to an embodiment of this application;
FIG. 22 illustrates a second flowchart of an information transmission method according to an embodiment of this application;
FIG. 23 illustrates a first schematic diagram of modules of an information transmission apparatus according to an embodiment of this application;
FIG. 24 illustrates a second schematic diagram of modules of an information transmission apparatus according to an embodiment of this application;
FIG. 25 illustrates a structural block diagram of a communication device according to an embodiment of this application;
FIG. 26 illustrates a structural block diagram of a terminal according to an embodiment of this application; and
FIG. 27 illustrates a structural block diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

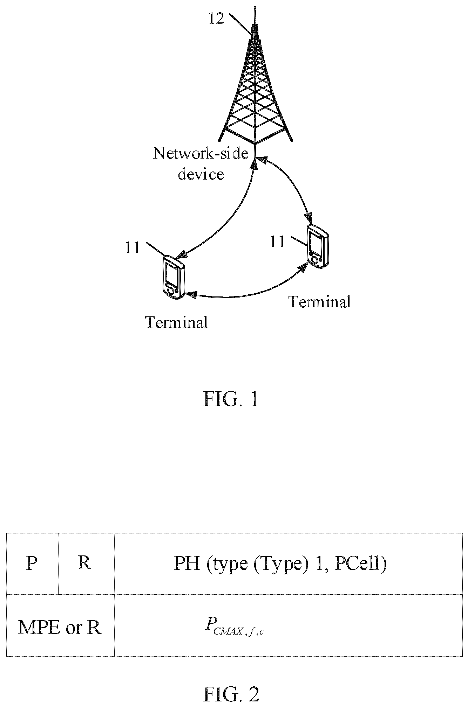

FIG. 1 is a block diagram of a wireless communication system to which the embodiments of this application are applicable. The wireless communication system includes a terminal 11 and a network-side device 12. The terminal 11 may be a terminal side device such as a mobile phone, a tablet computer (Tablet Personal Computer), a laptop computer (Laptop Computer) or referred to as a notebook computer, a personal digital assistant (personal digital assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal 11 is not limited in the embodiments of this application. The network-side device 12 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Network, WLAN) access point, a wireless local area network (Wireless local area network, Wi-Fi) node, or the like. The base station may be referred to as a NodeB, an evolved NodeB (Evolved Node B, eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

To enable persons skilled in the art to better understand the embodiments of this application, the following description is provided.

### 1. Related waveform indication manner and possible switching manner

In the related art, transmission waveforms for an ordinary physical uplink shared channel (Physical Uplink Shared Channel, PUSCH) and a PUSCH used for message 3 (message 3, MSG3) transmission are configured by using a physical uplink shared channel configuration (PUSCH-config) and a random access channel (Random Access Channel, RACH) common configuration (Config Common), respectively. The respective waveforms are updated only during radio resource control (Radio Resource Control, RRC) reconfiguration. Assuming that a PUSCH scheduled by downlink control information (Downlink Control Information, DCI) 0_0 is MSG3 PUSCH transmission by using a discrete Fourier transform spread orthogonal frequency division multiplexing (DFT-s-OFDM) waveform, and a PUSCH scheduled by DCI 0_1 is ordinary PUSCH transmission by using a cyclic prefix orthogonal frequency division multiplexing (CP-OFDM) waveform, a type of potential waveform switching may be implemented by using different scheduling DCIs. However, strictly speaking, in this manner, two types of PUSCHs for same UE are transmitted by using different waveforms, which cannot be considered as dynamic waveform switching.

### 2. Power headroom report (Power Headroom Report, PHR)

The PHR reports a difference between an uplink transmit power and a maximum transmit power of the UE to a next generation Node B (the next Generation Node B, gNB), so as to assist the gNB in power control and resource scheduling for uplink transmission of the UE. RRC configures the timers phr-PeriodicTimer and phr-ProhibitTimer, as well as the parameter phr-Tx-PowerFactorChange, to control the PHR process.

Trigger conditions for power headroom reporting include the following cases:
(1) In a case that the UE has uplink resources for transmitting new data, the phr-ProhibitTimer expires or has expired, and after last transmission of a power headroom report, a path loss change exceeds a configured phr-Tx-PowerFactorChange dB value.
(2) The phr-PeriodicTimer expires.
(3) In a case that the RRC layer has configured or reconfigured the PHR function or parameter, and such configuration or reconfiguration does not disable a PHR operation.
(4) A secondary cell (Secondary Cell, SCell) with one configured uplink (configured uplink) of any medium access control (Medium Access Control, MAC) entity is activated.
(5) A secondary cell group (Secondary Cell Group, SCG) is activated.
(6) A primary secondary cell (Primary Secondary Cell, PScell) is added.
(7) In a case that the UE has uplink resources for transmitting new data, the phr-ProhibitTimer expires or has expired, and a power backoff change corresponding to an uplink carrier exceeds a configured phr-Tx-PowerFactorChange dB value.
(8) In a case that an active BWP of an SCell with a configured uplink (configured uplink) of any MAC entity switches from a dormant BWP to a non-dormant DL BWP.
(9) If mpe-Reporting-FR2 is configured and the mpe-ProhibitTimer (mpe-ProhibitTimer) is not running:
   a measured P-MPR applied to meet the FR2 MPE requirements specified in TS 38.101-2[ 15] is equal to or greater than a maximum permissible exposure (Maximum Permissive Exposure, MPE) threshold for at least one active frequency range 2 (Frequency Range 2, FR2) serving cell since the last transmission of the PHR in this MAC entity; or
   because the measured P-MPR applied to meet the MPE requirement is equal to or greater than the MPE threshold in the MAC entity, the change of the measured P-MPR applied to meet the FR2 MPE requirements specified in TS 38.101-2[15] for at least one active FR2 serving cell since the last transmission of the PHR is greater than the PHR transmit power change factor (phr-Tx-PowerFactorChange).

In this case, the PHR is hereinafter referred to as an "MPE P-MPR Report".

After the PHR is triggered, the MAC layer generates a PHR MAC CE (single entry or multiple entry) and packs it into an MAC PDU to send to the physical layer. Then, the MAC layer starts/restarts the phr-PeriodicTimer and phr-ProhibitTimer and cancels the triggered PHR, meaning the MAC entity considers that this PHR trigger has been processed. If there is an uplink transmission grant, the UE generates a PHR MAC CE, and during generation of the MAC PDU, the UE packs the PHR MAC CE into an MAC protocol data unit (Protocol Data Unit, PDU). The MAC PDU is sent to the physical layer, and the physical layer performs channel coding and maps the MAC PDU to the PUSCH for transmission. Upon receiving this MAC PDU, the gNB separates the PHR MAC CE from the MAC PDU.

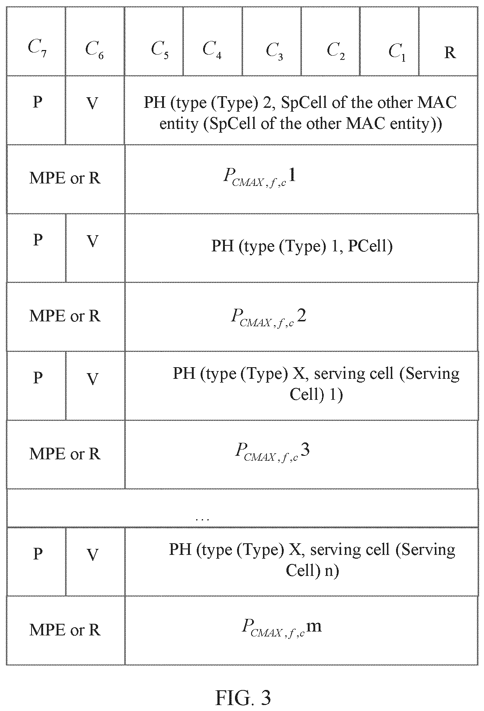

Power headroom (PH) is a difference between a maximum transmit power allowed by the terminal and a currently estimated PUSCH transmit power. It indicates how much transmit power the UE can use besides a transmit power currently used for PUSCH transmission. The network side selects the number of to-be-scheduled time-frequency blocks and a modulation format based on the power headroom reported by the UE. Power headroom (PH) is divided into real PH (real PH) and virtual PH (virtual PH), where the real PH is obtained through calculation based on a transmission parameter actually allocated by the network side, such as a physical resource and a power compensation factor, and the virtual PH is obtained through calculation based on a predefined transmission parameter. In related specifications, if the UE triggers a PHR report and a sending condition is met, the UE needs to send the PHR in the format of MAC CE (control element). As shown in FIG. 2, it is the format of single entry PHR MAC CE (Single Entry PHR MAC CE) in the related art, and FIG. 3 is the format of multiple entry PHR MAC CE (Multiple Entry PHR MAC CE).

P is used to indicate whether a corresponding *P_{CMAX,f,c}* value has undergone power backoff due to power management. This field being set to 1 indicates presence of power backoff causing a change of *P_{CMAX,f,c}*; Cᵢ indicates the PH field of the i-th carrier component (Carrier Component, CC) or the i-th serving cell index (ServCellIndex). The Cᵢ field being set to 1 indicates that the PH field of the serving cell with CC/ServCellIndex i is reported. The Cᵢ field being set to 0 indicates that the PH field of the serving cell with ServCellIndex i is not reported; R is a reserved bit and is set to 0; V indicates whether the PH value is based on actual transmission or a reference format. For Type 1 PH, the V field being set to 0 indicates actual transmission on PUSCH, and the V field being set to 1 indicates use of a PUSCH reference format. For Type 2 PH, the V field being set to 0 indicates actual transmission on PUCCH, and the V field being set to 1 indicates use of a PUCCH reference format. For Type 3 PH, the V field being set to 0 indicates actual transmission on SRS, and the V field being set to 1 indicates use of an SRS reference format. In addition, for type 1, type 2, and type 3 PHs, the V field being set to 0 indicates presence of an octet containing the associated *P_{CMAX,f,c}* field, and the V field being set to 1 indicates that the octet containing the associated *P_{CMAX,f,c}* field is omitted. PH indicates a power headroom level.

The following specifically describes the information transmission method provided in the embodiments of this application through specific embodiments and application scenarios thereof with reference to the accompanying drawings.

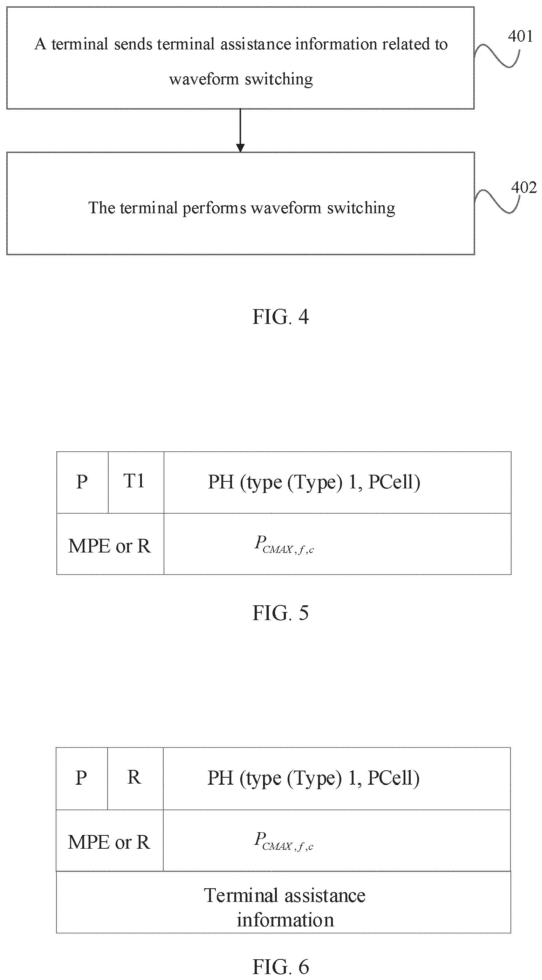

As shown in FIG. 4, an embodiment of this application provides an information transmission method, including the following steps.

Step 401: A terminal sends terminal assistance information related to waveform switching.

The terminal assistance information includes at least one of the following:
item 1: first information related to a first power headroom corresponding to a first waveform;
item 2: first delta (Delta) information, where the first delta information is used to indicate a delta of first parameters corresponding to different waveforms;
item 3: second delta information, where the second delta information is used to indicate a delta of first parameters corresponding to different modulation schemes of a same waveform, and the first parameter includes at least one of a power headroom PH, a maximum transmit power of the terminal, and a maximum power reduction (Allowed Maximum Power Reduction, MPR);
item 4: a maximum transmit power of the terminal corresponding to a first waveform;
item 5: information related to a second parameter, where the second parameter includes at least one of an MPR, an additional maximum power reduction (Additional Maximum Power Reduction, A-MPR), and a power management maximum power reduction (Power Management Maximum Power Reduction, P-MPR); and
the information related to the second parameter includes at least one of information related to a second parameter corresponding to the first waveform and/or information related to a second parameter corresponding to the second waveform; and
item 6: second information related to a maximum permissible exposure (Maximum Permissible Exposure, MPE) corresponding to the first waveform.

The first waveform is a waveform other than a second waveform, and the second waveform is a waveform actually used for physical uplink channel transmission by the terminal, where the actually used waveform may be a waveform used before waveform switching, or a waveform currently actually used for physical uplink channel transmission by the terminal. Alternatively, the second waveform can also be described as a waveform corresponding to the power headroom report.

Optionally, for the item 1, the first power headroom includes at least one of the following:
a power headroom determined based on an actual transmission parameter of the second waveform, for example, a power headroom that is determined based on the number of resource blocks (Resource Block, RB), a modulation and coding scheme (Modulation and coding scheme, MCS), and the like corresponding to a PUSCH last transmitted using the second waveform;
a power headroom determined based on a reference transmission parameter of the second waveform; where the reference transmission parameter includes the number of RBs, an MCS, and the like;
a power headroom determined based on an actual transmission parameter of the first waveform, for example, a power headroom that is determined based on the number of RBs, an MCS, and the like corresponding to a PUSCH last transmitted using the first waveform; and
a power headroom determined based on a reference transmission parameter of the first waveform, where the reference transmission parameter includes the number of RBs, an MCS, and the like.

Optionally, the first information is related to at least one of the following parameters (that is, calculation of the first power headroom corresponding to the first waveform is related to at least one of the following parameters):
A1: An MPR corresponding to a target waveform, where the target waveform is the first waveform or the second waveform.
A2: An offset value between an MPR of the second waveform and an MPR of the first waveform.

The offset value here may be a difference between the MPR of the second waveform and the MPR of the first waveform specified in the protocol, or may be obtained based on a predefined function, where the function is related to the MPR of the first waveform and/or the MPR of the second waveform, or may be a predefined fixed value (greater than 0), or a fixed value for each waveform, or a fixed value for one or more modulation schemes for each waveform.

A3: A modulation and coding scheme MCS configuration associated with the first waveform.

A4: A frequency domain resource allocation (Frequency Domain Resource Allocation, FDRA) configuration associated with the first waveform.

A5: A power parameter associated with the first waveform, where the power parameter includes a target received power value P₀ or a path loss compensation factor α.

A6: A third parameter corresponding to an actual transmitted physical uplink shared channel PUSCH or sounding reference signal (Sounding Reference Signal, SRS), where the third parameter includes at least one of an MCS, an FDRA, a position of physical resource block (Physical Resource Block, PRB), P₀, and an α value.

In this embodiment of this application, the actual transmitted PUSCH or SRS is an actual PUSCH or SRS transmitted on the second waveform.

A7: A configuration value of a fourth parameter, where the fourth parameter includes at least one of an A-MPR, a P-MPR, and an allowed operating band edge transmission power relaxation ΔT_{C}.

Optionally, a configuration value of the fourth parameter is 0.

Optionally, for the sixth item, the second information includes at least one of the following:
an MPE requirement corresponding to the first waveform; and
a first backoff value, where the first backoff value is a power backoff value required for meeting the MPE requirement of the first waveform.

In this embodiment of this application, the terminal assistance information may alternatively be described as UE assistance information.

The first waveform is a DFT-s-OFDM or CP-OFDM waveform; and the second waveform is a CP-OFDM or DFT-s-OFDM waveform.

Step 402: The terminal performs the waveform switching.

In this embodiment of the application, the terminal sends terminal assistance information related to waveform switching; and the terminal performs waveform switching; where the terminal assistance information includes at least one of the following: first information related to a first power headroom corresponding to a first waveform; first delta information, where the first delta information is used to indicate a delta of first parameters corresponding to different waveforms; second delta information, where the second delta information is used to indicate a delta of first parameters corresponding to different modulation schemes of a same waveform, and the first parameter includes at least one of a power headroom PH, a maximum transmit power of the terminal, and a maximum power reduction MPR; a maximum transmit power of the terminal corresponding to the first waveform; information related to a second parameter, where the second parameter includes at least one of an MPR, an additional maximum power reduction A-MPR, and a power management maximum power reduction P-MPR; and second information related to a maximum permissible exposure MPE corresponding to the first waveform; where the first waveform is a waveform other than a second waveform; and the second waveform is a waveform actually used for physical uplink channel transmission of the terminal. That is, in the embodiments of this application, the terminal provides the network-side device with information such as the information related to the first power headroom corresponding to the first waveform, which is a waveform other than the one actually used for physical uplink channel transmission, enabling the network-side device to obtain information related to waveforms other than the currently used transmission waveform. This allows the network-side device, when using different waveforms, to control the terminal based on the assistance information to perform waveform switching, thereby achieving the purpose of reasonably scheduling uplink transmission for the terminal or reasonably controlling an uplink power of the UE. In other words, based on the terminal assistance information, the network-side device can be assisted in achieving proper scheduling of uplink transmission of the terminal or proper control of the uplink power of the terminal, thereby effectively improving transmission performance.

As an optional implementation, the sending, by a terminal, terminal assistance information related to waveform switching includes:
sending, by the terminal, a first medium access control control element MAC CE, where in a case that a value of a first reserved bit in the first MAC control element (Control Element, CE) is a first value or a value of a logical channel identifier (Logical Channel Identify, LCID) or enhanced logical channel identifier (enhanced Logical Channel Identify, eLCID) corresponding to the first MAC CE is a second value, the first MAC CE is used for transmitting the terminal assistance information.

Optionally, the first MAC CE is an MAC CE for transmitting third information related to a second power headroom corresponding to the second waveform. Optionally, the first reserved bit is the 2nd bit of a first byte of the first MAC CE.

The first MAC CE is a single entry PHR MAC CE (Single Entry PHR MAC CE) or a multiple entry PHR MAC CE (Multiple Entry PHR MAC CE). In this implementation, the terminal assistance information is reported based on modification of the related PHR MAC CE structure.

Specifically, the reserved bit is used to distinguish whether the first MAC CE is used for transmitting information related to the second power headroom or the terminal assistance information. For example, the first reserved bit (R) is modified to a T1 flag bit. When T1 is 0, it indicates that the first MAC CE transmits information related to the second power headroom, and when T1 is 1, it indicates that the first MAC CE transmits the terminal assistance information. For example, in a case that the second waveform is a DFT-s-OFDM waveform configured by RRC, the information related to the second power headroom corresponds to the DFT-s-OFDM waveform, and the terminal assistance information corresponds to CP-OFDM. As shown in FIG. 5, using the first MAC CE as a single entry PHR MAC CE as an example, the first reserved bit (T1) is the 2nd bit (counted from left to right) of the first byte (counted from top to bottom) of the first MAC CE, for example, the second most significant bit MSB.

Alternatively, one new LCID or enhanced LCID (eLCID) is used to distinguish whether the first MAC CE transmits the terminal assistance information or the information related to the second power headroom. For example, if the MAC protocol data unit (Protocol Data Unit, PDU) reported by the UE includes an MAC subheader (MAC subheader) with one new LCID/eLCID, it is considered that the power headroom report included in the PAC PDU is the terminal assistance information. Additionally, a position of the MAC subheader in the MAC PDU is located before or after the second MAC CE.

As an optional implementation, the sending, by a terminal, terminal assistance information related to waveform switching includes:
sending, by the terminal, a second MAC CE, where the second MAC CE includes N first bytes and M second bytes, N and M being positive integers; where
the first byte is used for transmitting the terminal assistance information, and the second byte is used for transmitting third information related to a second power headroom corresponding to the second waveform.

In this implementation, a new PHR type is created to support reporting of the terminal assistance information. Specifically, a new entry (entry) is added to the related PHR MAC CE structure for reporting the terminal assistance information. The second MAC CE may be a single entry PHR MAC CE or a multiple entry PHR MAC CE.

Optionally, in this implementation, the N first bytes are located after or before the M second bytes; or the N first bytes and the M second bytes are arranged alternately. Certainly, the N first bytes and M second bytes may alternatively be arranged according to other predefined sorting methods, which are not specifically limited here.

For example, as shown in FIG. 6, the 1st byte and the 2nd byte are second bytes for transmitting the information related to the second power headroom, and the 3rd byte is a first byte for transmitting the terminal assistance information.

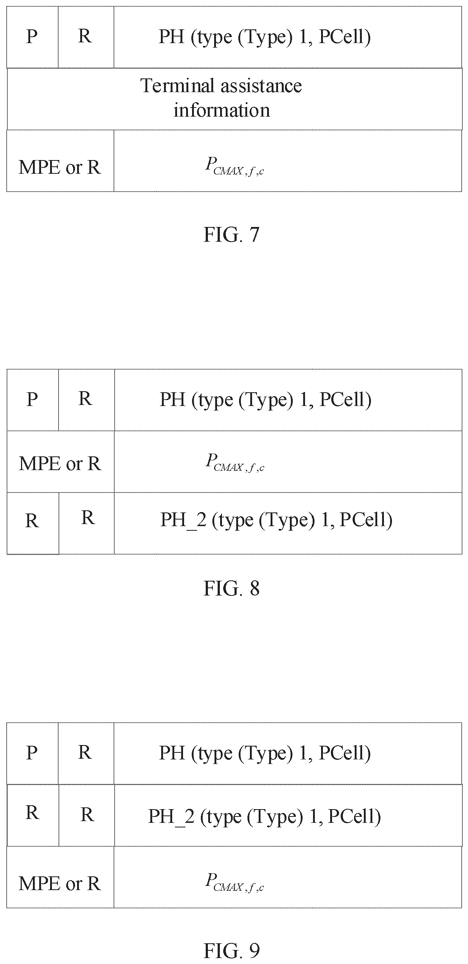

For another example, as shown in FIG. 7, the 1st byte and the 3rd byte are second bytes for transmitting the information related to the second power headroom, and the 2nd byte is a first byte for transmitting the terminal assistance information.

The following provides description based on specific terminal assistance information.

For example, the terminal assistance information is information related to the first power headroom (PH_2 (Type 1, PCell)) corresponding to the first waveform, and a position of the first byte of the information related to the first power headroom corresponding to the first waveform is shown in FIG. 8 and FIG. 9. PH (Type (Type)) 1, primary cell (Primary Cell, PCell) indicates a power headroom corresponding to the second waveform, *P_{CMAX,f,c}* indicates a maximum transmit power of the terminal corresponding to the second waveform, and R indicates a reserved bit.

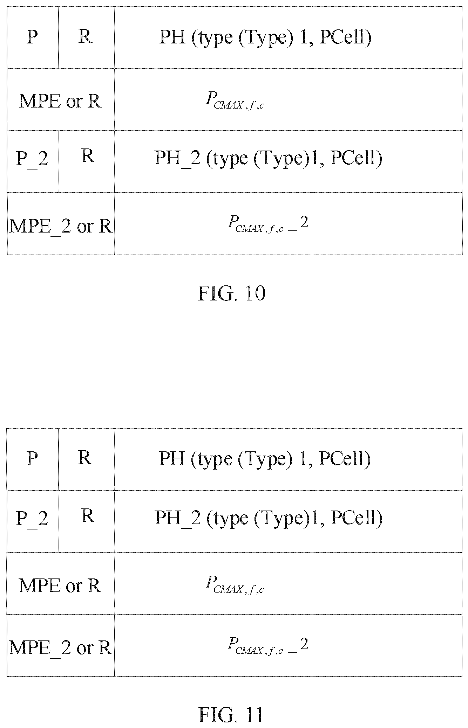

For another example, the terminal assistance information includes the information related to the first power headroom corresponding to the first waveform and the maximum transmit power *P_{CMAX,f,c}_*2 corresponding to the first waveform; in this case, a position relationship between the first byte and the second byte is as shown in FIG. 10 (the first byte is located after the second byte) and FIG. 11 (the first byte and the second byte are arranged alternately).

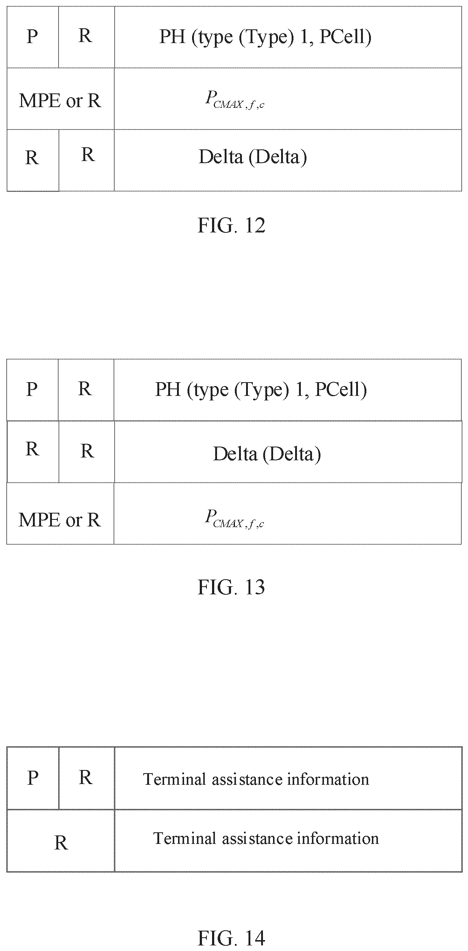

For another example, if the terminal assistance information is delta (Delta) information, the position relationship between the first byte and the second byte is as shown in FIG. 12 (the first byte is located after the second byte) and FIG. 13 (the first byte and the second byte are arranged alternately, that is, the first byte is located between two second bytes).

As an optional implementation, the sending, by a terminal, terminal assistance information includes:
sending, by the terminal, a third MAC CE, where the third MAC CE includes the terminal assistance information, and the third MAC CE is an MAC CE dedicated to transmitting the terminal assistance information.

Optionally, a value of the LCID or the enhanced LCID corresponding to the third MAC CE is a third value.

In this implementation, a brand-new MAC CE is created to report the terminal assistance information separately, as shown in FIG. 14. In this implementation, one LCID or eLCID is required to indicate that the MAC CE is used for reporting the terminal assistance information.

For example, if the MAC PDU reported by the UE includes an MAC subheader of one new LCID/eLCID (that is, a value of the LCID or enhanced LCID corresponding to the third MAC CE is a third value), it is considered that the PAC PDU includes the terminal assistance information. Additionally, the position of the MAC subheader in the MAC PDU is located before or after the third MAC CE.

As an optional implementation, the sending, by a terminal, terminal assistance information related to waveform switching includes:
sending, by the terminal, a fourth MAC CE, where the fourth MAC CE includes P third bytes and Q fourth bytes, P and Q being positive integers; where
the P third bytes are used for transmitting fourth information related to second power headrooms corresponding to second waveforms of a plurality of cells; and
the Q fourth bytes are used for transmitting terminal assistance information of the plurality of cells.

In this implementation, an arrangement manner of P third bytes and Q fourth bytes is, for example, that the P first bytes are located after or before Q second bytes or the P third bytes and Q fourth bytes are crossed. Certainly, the P third bytes and Q fourth bytes may alternatively be arranged according to other predefined sorting methods, which are not specifically limited here.

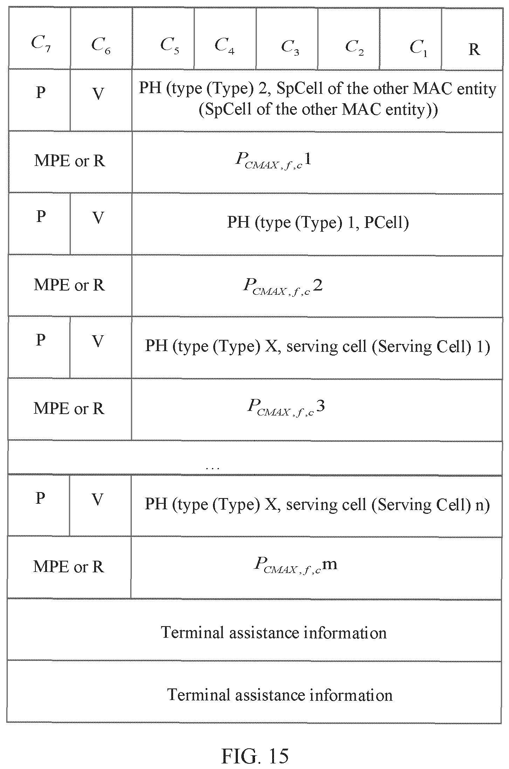

In this implementation, in a scenario of joint reporting of terminal assistance information for multiple carriers, joint reporting of terminal assistance information for multiple carriers refers to reporting terminal assistance information of multiple carriers (carrier) or multiple cells together, that is, reporting only one or more terminal assistance information, specifically depending on a waveform (waveform) combination that may be used by the multiple carriers. For example, there are two serving cells (serving cell), and each serving cell may have two types of RRC-configured waveforms {CP-OFDM, DFT-S-OFDM}. In this case, the waveform combinations include {CP for cell 1, CP for cell 2}, {CP for cell 1, DFT for cell 2}, {DFT for cell 1, CP for cell 2}, {DFT for cell 1, DFT for cell 2}, and reporting of the corresponding terminal assistance information may have four cases. In a case that there are three serving cells, reporting of the corresponding terminal assistance information may have eight cases, and so on. Using multi entry PHR MAC CE as an example, as shown in FIG. 15, the last two bytes are fourth bytes for transmitting the terminal assistance information. PH (Type2, SpCell of the other MAC entity (SpCell of the other MAC entity)) and *P_{CMAX,f,c}*1 indicate information related to a second power headroom corresponding to a special cell (special Cell, SpCell); PH (Type1, PCell) and *P_{CMAX,f,c}*2 indicate information related to a second power headroom corresponding to a PCell; and PH (TypeX, Serving Cell n) and *P_{CMAX,f,c}*m indicate information related to a second power headroom corresponding to a serving cell n.

Cᵢ indicates a PH field of the i-th carrier component (Carrier Component, CC) or the i-th serving cell index (ServCellIndex). The Cᵢ field being set to 1 indicates that the PH field of the serving cell with CC/ServCellIndex i is reported. The Cᵢ field being set to 0 indicates that the PH field of the serving cell with ServCellIndex i is not reported; R is a reserved bit set to 0; V indicates whether the PH value is based on actual transmission or a reference format. For Type 1 PH, the V field being set to 0 indicates actual transmission on PUSCH, and the V field being set to 1 indicates use of a PUSCH reference format. For Type 2 PH, the V field being set to 0 indicates actual transmission on PUCCH, and the V field being set to 1 indicates use of a PUCCH reference format. For Type 3 PH, the V field being set to 0 indicates actual transmission on SRS, and the V field being set to 1 indicates use of an SRS reference format. In addition, for type 1, type 2, and type 3 PHs, the V field being set to 0 indicates presence of an octet containing the associated P_{CMAX,f,c} field, while the V field set to 1 indicates that the octet containing the associated P_{CMAX,f,c} field is omitted. PH indicates a power headroom level.

Optionally, Q is determined based on a total length of the terminal assistance information of the plurality of cells, or Q is determined based on the number of cells in the plurality of cells.

For example, if the total length of the terminal assistance information of the plurality of cells needs to occupy 2 bytes, the terminal assistance information of the plurality of cells is transmitted by using two bytes. Alternatively, the terminal assistance information of each cell corresponds to one byte, and if there are four cells in total, terminal assistance information of the four cells is transmitted by four bytes respectively.

The following describes some arrangement manners of the P third bytes and Q fourth bytes with reference to the accompanying drawings.

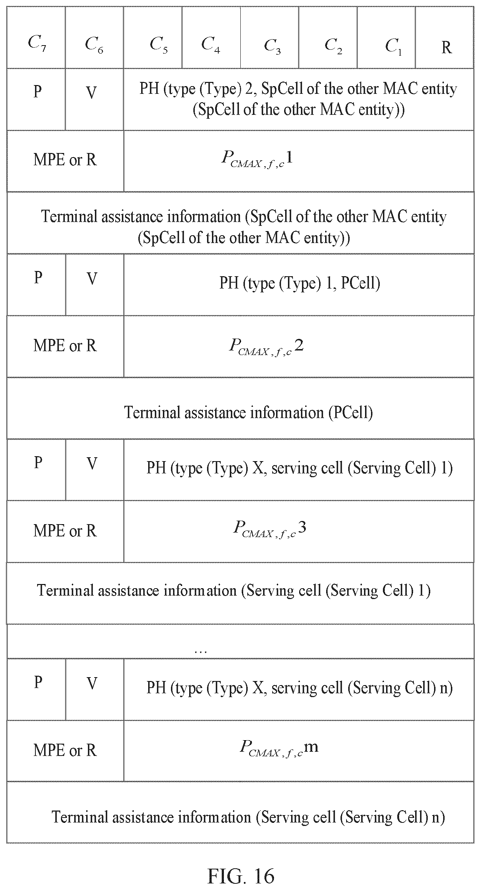

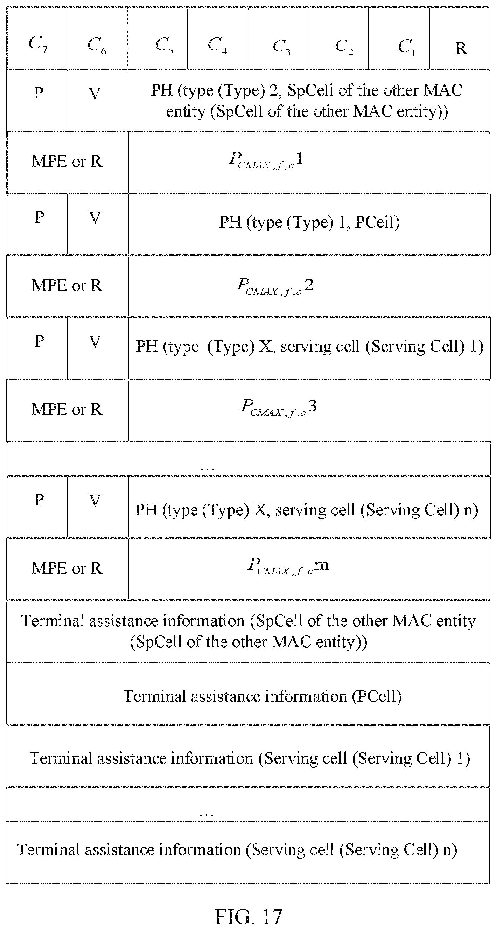

As shown in FIG. 16, an entry of terminal assistance information belonging to a same cell is inserted after an entry belonging to the cell. That is, a byte corresponding to the terminal assistance information of the same cell is set adjacent to a byte corresponding to information related to the second power headroom. Alternatively, as shown in FIG. 17, Q fourth bytes corresponding to the terminal assistance information are located after the P third bytes corresponding to the information related to the second power headroom. PH (Type2, SpCell of the other MAC entity) and *P_{CMAX,f,c}*1 indicate information related to a second power headroom corresponding to SpCell; PH (Type1, PCell) and *P_{CMAX,f,c}*2 indicate information related to a second power headroom corresponding to PCell; and PH (TypeX, Serving Cell n) and *P_{CMAX,f,c}*m indicate information related to a second power headroom corresponding to serving cell n.

As an optional implementation, the sending, by a terminal, terminal assistance information related to waveform switching includes:
sending, by the terminal, a fifth MAC CE, where the fifth MAC CE includes K fifth bytes, L sixth bytes, and one seventh byte, K and L being positive integers; where
the K fifth bytes are used for transmitting fifth information related to second power headrooms corresponding to second waveforms of S cells, and S is a positive integer greater than 1;
the sixth byte is used for transmitting terminal assistance information of T cells, where T≤S and T is a positive integer;
the seventh byte includes a bitmap, and S bits in the bitmap are in one-to-one correspondence to the S cells; and
a value of the bit being a fourth value is used to indicate that the fifth MAC CE includes terminal assistance information of a cell corresponding to the bit, and a value of the bit being a fifth value is used to indicate that the fourth MAC CE does not include the terminal assistance information of the cell corresponding to the bit.

In this implementation, in a scenario of joint reporting of terminal assistance information for multiple carriers, the terminal assistance information is reported per cell, and cells for which terminal assistance information needs to be reported are controlled by using an independent bitmap (bitmap), such as Aᵢ. Aᵢ is used to indicate whether a terminal assistance information field of a cell with index i needs to be reported. For example, a value of Aᵢ being 1 indicates that the terminal assistance information of the cell with index i needs to be reported, and a value of Aᵢ being 0 indicates that the terminal assistance information of the cell with index i does not need to be reported.

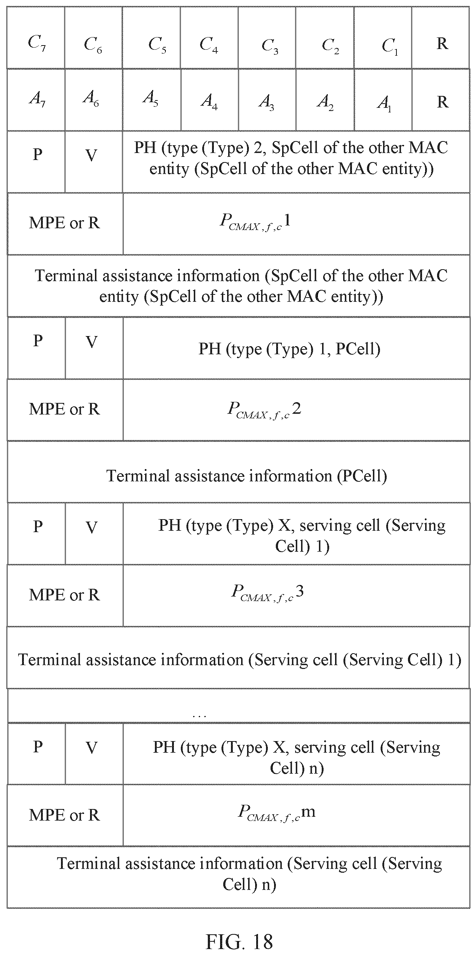

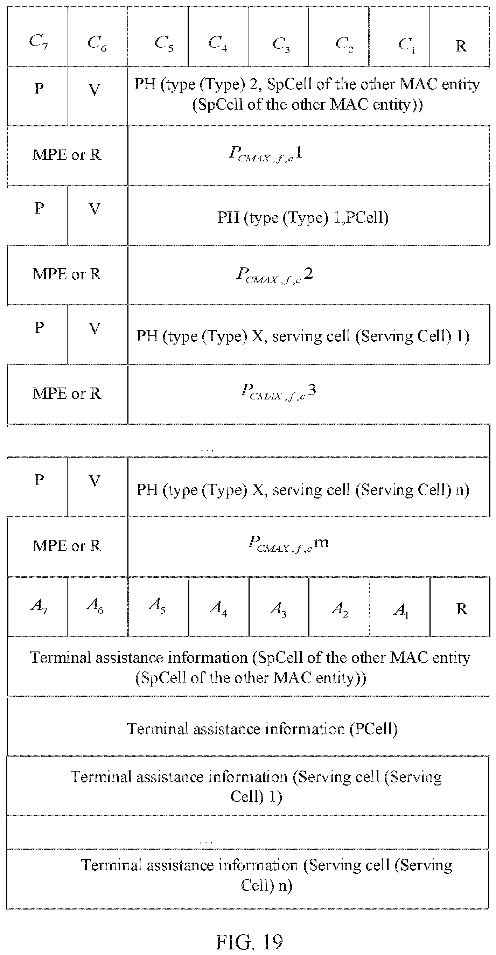

Optionally, the K fifth bytes, L sixth bytes, and one seventh byte may be arranged alternately, as shown in FIG. 18; or the fifth bytes, the sixth bytes, and the seventh byte may be sorted in a preset order, which is not specifically limited here. As shown in FIG. 19, the L sixth bytes and seventh byte are set after K fifth bytes. PH (Type2, SpCell of the other MAC entity) and *P_{CMAX,f,c}*1 indicate information related to a second power headroom corresponding to SpCell; PH (Type1, PCell) and *P_{CMAX,f,c}*2 indicate information related to a second power headroom corresponding to PCell; and PH (TypeX, Serving Cell n) and *P_{CMAX,f,c}*m indicate information related to a second power headroom corresponding to serving cell n.

As an optional implementation, the sending, by a terminal, terminal assistance information related to waveform switching includes:
sending, by the terminal, a sixth MAC CE, where the sixth MAC CE includes F eighth bytes and H ninth bytes, F and H being positive integers; where
the eighth byte is used for transmitting sixth information related to second power headrooms corresponding to second waveforms of a plurality of cells; and
sending, by the terminal, a fifth MAC CE, where the fifth MAC CE includes F eighth bytes and H ninth bytes, F and H being positive integers; where
the eighth byte is used for transmitting information related to second power headrooms corresponding to second waveforms of a plurality of cells; and
a value of a second reserved bit in the ninth byte being a sixth value is used to indicate that the ninth byte includes terminal assistance information, and the value of the second reserved bit being a seventh value is used to indicate that the ninth byte does not include terminal assistance information.

In this implementation, one reserved bit (for example, being set to A) is used in the ninth byte for transmitting terminal assistance information to indicate whether the terminal assistance information of the cell corresponding to the ninth byte needs to be reported. Each ninth byte corresponds to terminal assistance information of one cell. For example, a value of A being set to 1 indicates that the terminal assistance information of the cell corresponding to the ninth byte needs to be reported, and a value of A being set to 0 indicates that the terminal assistance information of the cell corresponding to the ninth byte does not need to be reported.

The second reserved bit may be located in any position of the ninth byte.

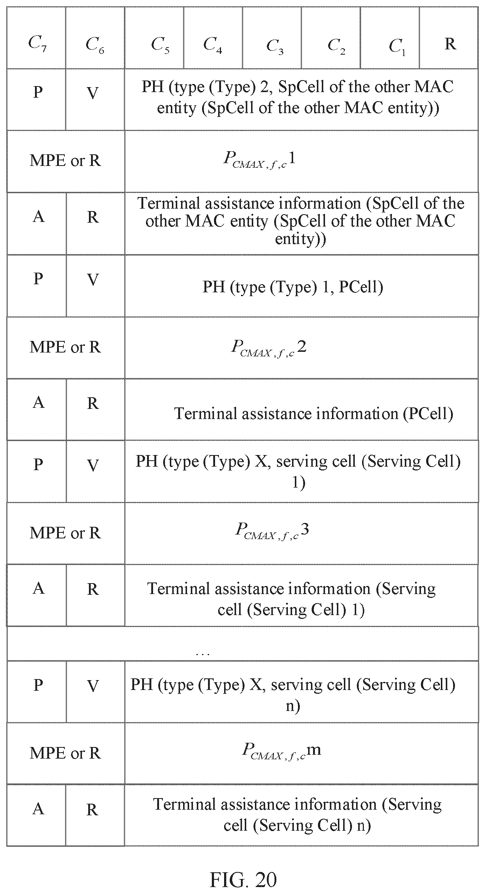

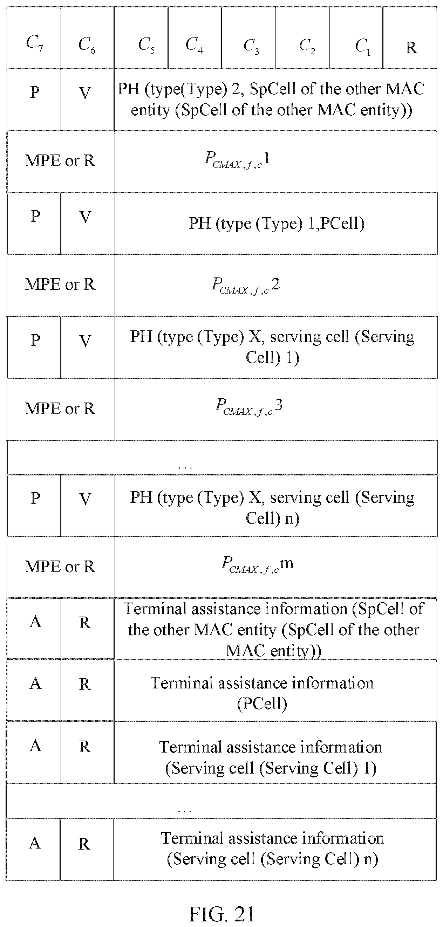

Alternatively, the F eighth bytes and the H ninth bytes may be arranged alternately, or the F eighth bytes and H ninth bytes may be sorted in a preset order, which is not specifically limited here. As shown in FIG. 20, eighth bytes and ninth bytes corresponding to a same cell are arranged adjacent to each other, or as shown in FIG. 21, H ninth bytes are located after F eighth bytes.

It should be noted that all the implementations described above may also be applied to multiple TRP (multiple TRP) scenarios, that is, enhanced single entry PHR for multiple TRP MAC CE or enhanced multiple entry PHR for multiple TRP MAC CE. For example, for a type 3 PH report, if there are two SRS resource sets in srs-ResourceSetToAddModList or srs-ResourceSetToAddModListDCI-0-2, and two PHR modes are provided, considering two waveforms and two TRPs, four PHR are reported.

In this embodiment of the application, the terminal sends terminal assistance information related to waveform switching; and the terminal performs waveform switching; where the terminal assistance information includes at least one of the following: first information related to a first power headroom corresponding to a first waveform; first delta information, where the first delta information is used to indicate a delta of first parameters corresponding to different waveforms; second delta information, where the second delta information is used to indicate a delta of first parameters corresponding to different modulation schemes of a same waveform, and the first parameter includes at least one of a power headroom PH, a maximum transmit power of the terminal, and a maximum power reduction MPR; a maximum transmit power of the terminal corresponding to the first waveform; information related to a second parameter, where the second parameter includes at least one of an MPR, an additional maximum power reduction A-MPR, and a power management maximum power reduction P-MPR; and second information related to a maximum permissible exposure MPE corresponding to the first waveform; where the first waveform is a waveform other than a second waveform; and the second waveform is a waveform actually used for physical uplink channel transmission of the terminal. That is, in the embodiments of this application, the terminal provides the network-side device with information such as the information related to the first power headroom corresponding to the first waveform, which is a waveform other than the one actually used for physical uplink channel transmission, enabling the network-side device to obtain information related to waveforms other than the currently used transmission waveform. This allows the network-side device, when using different waveforms, to control the terminal based on the assistance information to perform waveform switching, thereby achieving the purpose of reasonably scheduling uplink transmission for the terminal or reasonably controlling an uplink power of the UE. In other words, based on the terminal assistance information, the network-side device can be assisted in achieving proper scheduling of uplink transmission of the terminal or proper control of the uplink power of the terminal, thereby effectively improving transmission performance.

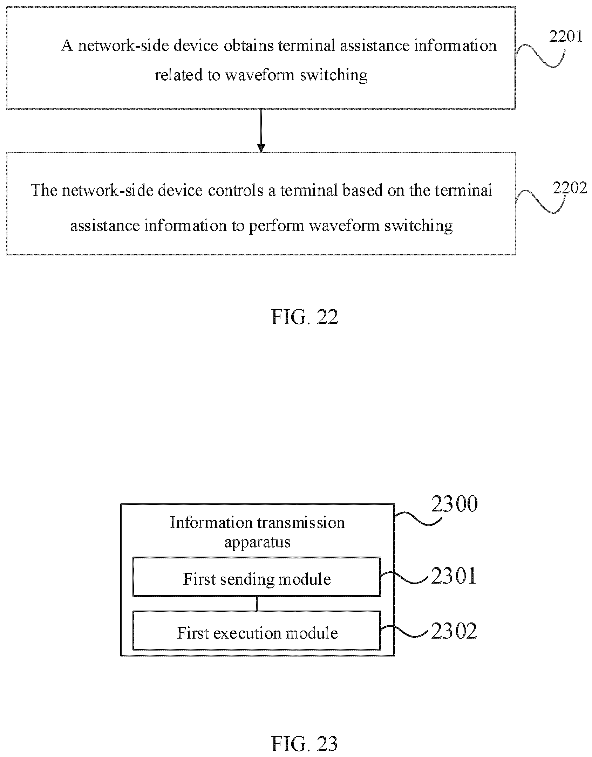

As shown in FIG. 22, an embodiment of this application further provides an information transmission method, including the following steps.

Step 2201: A network-side device obtains terminal assistance information related to waveform switching.

Step 2202: The network-side device controls the terminal based on the terminal assistance information to perform waveform switching.

The terminal assistance information includes at least one of the following:
first information related to a first power headroom corresponding to a first waveform;
first delta information, where the first delta information is used to indicate a delta of first parameters corresponding to different waveforms;
second delta information, where the second delta information is used to indicate a delta of first parameters corresponding to different modulation schemes of a same waveform, and the first parameter includes at least one of a power headroom PH, a maximum transmit power of the terminal, and a maximum power reduction MPR;
a maximum transmit power of the terminal corresponding to the first waveform;
information related to a second parameter, where the second parameter includes at least one of an MPR, an additional maximum power reduction A-MPR, and a power management maximum power reduction P-MPR; and
second information related to a maximum permissible exposure MPE corresponding to the first waveform; where
the first waveform is a waveform other than a second waveform; and the second waveform is a waveform actually used for physical uplink channel transmission of the terminal.

In this embodiment of the application, the network-side device obtains terminal assistance information related to waveform switching, and based on the terminal assistance information, the network-side device can obtain information such as information related to first power headrooms corresponding to other waveforms than a current transmission waveform. This allows the network-side device, when using different waveforms, to control the terminal based on the assistance information to perform waveform switching, thereby achieving the purpose of reasonably scheduling uplink transmission for the terminal or reasonably controlling an uplink power of the UE. In other words, based on the terminal assistance information, the network-side device can be assisted in achieving proper scheduling of uplink transmission of the terminal or proper control of the uplink power of the terminal, thereby effectively improving transmission performance.

Optionally, the first power headroom includes at least one of the following:
a power headroom determined based on an actual transmission parameter of the second waveform;
a power headroom determined based on a reference transmission parameter of the second waveform;
a power headroom determined based on an actual transmission parameter of the first waveform; and
a power headroom determined based on a reference transmission parameter of the first waveform.

Optionally, the first information is related to at least one of the following parameters:
an MPR corresponding to a target waveform, where the target waveform is the first waveform or the second waveform;
an offset value between an MPR of the second waveform and an MPR of the first waveform;
a modulation and coding scheme MCS configuration associated with the first waveform;
a frequency domain resource allocation FDRA configuration associated with the first waveform;
a power parameter associated with the first waveform, where the power parameter includes a target received power value P₀ or a path loss compensation factor α;
a third parameter corresponding to an actual transmitted physical uplink shared channel PUSCH or sounding reference signal SRS, where the third parameter includes at least one of an MCS, an FDRA, a position of physical resource block PRB, P₀, and an α value; and
a configuration value of a fourth parameter, where the fourth parameter includes at least one of an A-MPR, a P-MPR, and an allowed operating band edge transmission power relaxation ΔTc.

Optionally, the obtaining, by a network-side device, terminal assistance information related to waveform switching includes:
obtaining, by the network-side device, a first medium access control control element MAC CE; where
in a case that a value of a first reserved bit in the first MAC CE is a first value or a value of a logical channel identifier LCID or enhanced logical channel identifier eLCID corresponding to the first MAC CE is a second value, the first MAC CE is used for transmitting the terminal assistance information.

Optionally, the first MAC CE is an MAC CE for transmitting information related to a second power headroom corresponding to the second waveform.

Optionally, the first reserved bit is the 2nd bit of a first byte of the first MAC CE.

Optionally, the obtaining, by a network-side device, terminal assistance information related to waveform switching includes:
obtaining, by the network-side device, a second MAC CE, where the second MAC CE includes N first bytes and M second bytes, N and M being positive integers; where
the first byte is used for transmitting the terminal assistance information, and the second byte is used for transmitting third information related to a second power headroom corresponding to the second waveform.

Optionally, the obtaining, by a network-side device, terminal assistance information includes:
obtaining, by the network-side device, a third MAC CE, where the third MAC CE includes the terminal assistance information, and the third MAC CE is an MAC CE dedicated to transmitting the terminal assistance information.

Optionally, the obtaining, by a network-side device, terminal assistance information related to waveform switching includes:
obtaining, by the network-side device, a fourth MAC CE, where the fourth MAC CE includes P third bytes and Q fourth bytes, P and Q being positive integers; where
the P third bytes are used for transmitting fourth information related to second power headrooms corresponding to second waveforms of a plurality of cells; and
the Q fourth bytes are used for transmitting terminal assistance information of the plurality of cells.

Optionally, Q is determined based on a total length of terminal assistance information of at least one of the cells, or Q is determined based on the number of cells in the plurality of cells.

Optionally, the obtaining, by a network-side device, terminal assistance information related to waveform switching includes:
obtaining, by the network-side device, a fifth MAC CE, where the fifth MAC CE includes K fifth bytes, L sixth bytes, and one seventh byte, K and L being positive integers; where
the K fifth bytes are used for transmitting fifth information related to second power headrooms corresponding to second waveforms of S cells, and S is a positive integer greater than 1;
the sixth byte is used for transmitting terminal assistance information of T cells, where T≤S and T is a positive integer;
the seventh byte includes a bitmap, and S bits in the bitmap are in one-to-one correspondence to the S cells; and
a value of the bit being a fourth value is used to indicate that the fifth MAC CE includes terminal assistance information of a cell corresponding to the bit, and a value of the bit being a fifth value is used to indicate that the fifth MAC CE does not include the terminal assistance information of the cell corresponding to the bit.

Optionally, the obtaining, by a network-side device, terminal assistance information related to waveform switching includes:
obtaining, by the network-side device, a sixth MAC CE, where the sixth MAC CE includes F eighth bytes and H ninth bytes, F and H being positive integers; where
the eighth byte is used for transmitting sixth information related to second power headrooms corresponding to second waveforms of a plurality of cells; and
a value of a second reserved bit in the ninth byte being a sixth value is used to indicate that the ninth byte includes terminal assistance information, and the value of the second reserved bit being a seventh value is used to indicate that the ninth byte does not include terminal assistance information.

It should be noted that the method executed by the network-side device is a method corresponding to the method executed by the terminal, which is not repeated here.

In this embodiment of the application, the network-side device obtains terminal assistance information related to waveform switching, and based on the terminal assistance information, the network-side device can obtain information such as information related to first power headrooms corresponding to other waveforms than a current transmission waveform. This allows the network-side device, when using different waveforms, to control the terminal based on the assistance information to perform waveform switching, thereby achieving the purpose of reasonably scheduling uplink transmission for the terminal or reasonably controlling an uplink power of the UE. In other words, based on the terminal assistance information, the network-side device can be assisted in achieving proper scheduling of uplink transmission of the terminal or proper control of the uplink power of the terminal, thereby effectively improving transmission performance.

For the information transmission method provided in this embodiment of this application, the execution subject may be an information transmission apparatus. In the embodiments of this application, the information transmission apparatus provided in the embodiments of this application is described by using the information transmission method being executed by the information transmission apparatus as an example.

As shown in FIG. 23, an embodiment of this application further provides an information transmission apparatus 2300, which is applied to a terminal and includes:
a first sending module 2301, configured to send terminal assistance information related to waveform switching; and
a first execution module 2302, configured to perform waveform switching.

Optionally, the first power headroom includes at least one of the following:
a power headroom determined based on an actual transmission parameter of the second waveform;
a power headroom determined based on a reference transmission parameter of the second waveform;
a power headroom determined based on an actual transmission parameter of the first waveform; and
a power headroom determined based on a reference transmission parameter of the first waveform.

Optionally, the first information is related to at least one of the following parameters:
an MPR corresponding to a target waveform, where the target waveform is the first waveform or the second waveform;
an offset value between an MPR of the second waveform and an MPR of the first waveform;
a modulation and coding scheme MCS configuration associated with the first waveform;
a frequency domain resource allocation FDRA configuration associated with the first waveform;
a power parameter associated with the first waveform, where the power parameter includes a target received power value P₀ or a path loss compensation factor α;
a third parameter corresponding to an actual transmitted physical uplink shared channel PUSCH or sounding reference signal SRS, where the third parameter includes at least one of an MCS, an FDRA, a position of physical resource block PRB, P₀, and an α value; and
a configuration value of a fourth parameter, where the fourth parameter includes at least one of an A-MPR, a P-MPR, and an allowed operating band edge transmission power relaxation ΔTc.

Optionally, the second information includes at least one of the following:
an MPE requirement corresponding to the first waveform; and
a first backoff value, where the first backoff value is a power backoff value required for meeting the MPE requirement of the first waveform.

Optionally, the first sending module is configured to send a first medium access control control element MAC CE, where in a case that a value of a first reserved bit in the first MAC CE is a first value or a value of a logical channel identifier LCID or enhanced logical channel identifier eLCID corresponding to the first MAC CE is a second value, the first MAC CE is used for transmitting the terminal assistance information.

Optionally, the first MAC CE is an MAC CE for transmitting third information related to a second power headroom corresponding to the second waveform.

Optionally, the first reserved bit is the 2nd bit of a first byte of the first MAC CE.

Optionally, the first sending module is configured to send a second MAC CE, where the second MAC CE includes N first bytes and M second bytes, N and M being positive integers; where
the first byte is used for transmitting the terminal assistance information, and the second byte is used for transmitting third information related to a second power headroom corresponding to the second waveform.

Optionally, the first sending module is configured to send a third MAC CE, where the third MAC CE includes the terminal assistance information, and the third MAC CE is an MAC CE dedicated to transmitting the terminal assistance information. Optionally, the first sending module is configured to send a fourth MAC CE, where the fourth MAC CE includes P third bytes and Q fourth bytes, P and Q being positive integers; where
the P third bytes are used for transmitting fourth information related to second power headrooms corresponding to second waveforms of a plurality of cells; and
the Q fourth bytes are used for transmitting terminal assistance information of the plurality of cells.

Optionally, Q is determined based on a total length of the terminal assistance information of the plurality of cells, or Q is determined based on the number of cells in the plurality of cells.

Optionally, the first sending module is configured to send a fifth MAC CE, where the fifth MAC CE includes K fifth bytes, L sixth bytes, and one seventh byte, K and L being positive integers; where
the K fifth bytes are used for transmitting fifth information related to second power headrooms corresponding to second waveforms of S cells, and S is a positive integer greater than 1;
the sixth byte is used for transmitting terminal assistance information of T cells, where T≤S and T is a positive integer;
the seventh byte includes a bitmap, and S bits in the bitmap are in one-to-one correspondence to the S cells; and
a value of the bit being a fourth value is used to indicate that the fifth MAC CE includes terminal assistance information of a cell corresponding to the bit, and a value of the bit being a fifth value is used to indicate that the fifth MAC CE does not include the terminal assistance information of the cell corresponding to the bit.

Optionally, the first sending module is configured to send a sixth MAC CE, where the sixth MAC CE includes F eighth bytes and H ninth bytes, F and H being positive integers; where
the eighth byte is used for transmitting sixth information related to second power headrooms corresponding to second waveforms of a plurality of cells; and
a value of a second reserved bit in the ninth byte being a sixth value is used to indicate that the ninth byte includes terminal assistance information, and the value of the second reserved bit being a seventh value is used to indicate that the ninth byte does not include terminal assistance information.

In this embodiment of the application, the terminal sends terminal assistance information related to waveform switching; and the terminal performs waveform switching; where the terminal assistance information includes at least one of the following: first information related to a first power headroom corresponding to a first waveform; first delta information, where the first delta information is used to indicate a delta of first parameters corresponding to different waveforms; second delta information, where the second delta information is used to indicate a delta of first parameters corresponding to different modulation schemes of a same waveform, and the first parameter includes at least one of a power headroom PH, a maximum transmit power of the terminal, and a maximum power reduction MPR; a maximum transmit power of the terminal corresponding to the first waveform; information related to a second parameter, where the second parameter includes at least one of an MPR, an additional maximum power reduction A-MPR, and a power management maximum power reduction P-MPR; and second information related to a maximum permissible exposure MPE corresponding to the first waveform; where the first waveform is a waveform other than a second waveform; and the second waveform is a waveform actually used for physical uplink channel transmission of the terminal. That is, in the embodiments of this application, the terminal provides the network-side device with information such as the information related to the first power headroom corresponding to the first waveform, which is a waveform other than the one actually used for physical uplink channel transmission, enabling the network-side device to obtain information related to waveforms other than the currently used transmission waveform. This allows the network-side device, when using different waveforms, to control the terminal based on the assistance information to perform waveform switching, thereby achieving the purpose of reasonably scheduling uplink transmission for the terminal or reasonably controlling an uplink power of the UE. In other words, based on the terminal assistance information, the network-side device can be assisted in achieving proper scheduling of uplink transmission of the terminal or proper control of the uplink power of the terminal, thereby effectively improving transmission performance.

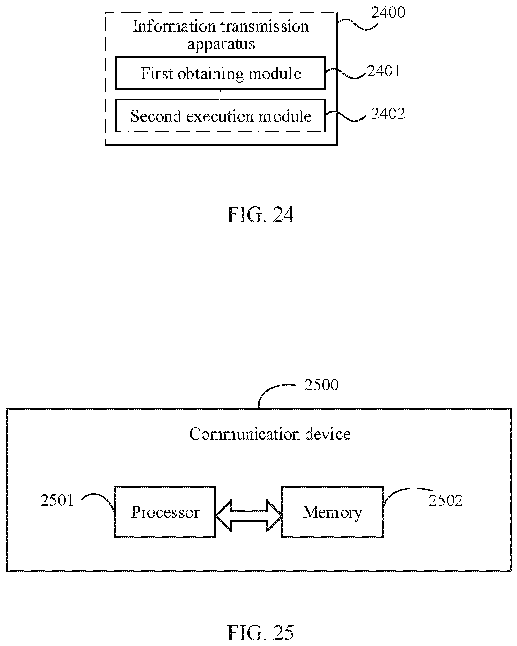

As shown in FIG. 24, an embodiment of this application further provides an information transmission apparatus 2400, which is applied to network-side device and includes:
a first obtaining module 2401, configured to obtain terminal assistance information; and
a second execution module 2402, configured to control the terminal based on the terminal assistance information to perform waveform switching.

The terminal assistance information includes at least one of the following:
first information related to a first power headroom corresponding to a first waveform;
first delta information, where the first delta information is used to indicate a delta of first parameters corresponding to different waveforms;
second delta information, where the second delta information is used to indicate a delta of first parameters corresponding to different modulation schemes of a same waveform, and the first parameter includes at least one of a power headroom PH, a maximum transmit power of the terminal, and a maximum power reduction MPR;
a maximum transmit power of the terminal corresponding to the first waveform;
information related to a second parameter, where the second parameter includes at least one of an MPR, an additional maximum power reduction A-MPR, and a power management maximum power reduction P-MPR; and
second information related to a maximum permissible exposure MPE corresponding to the first waveform; where
the first waveform is a waveform other than a second waveform; and the second waveform is a waveform actually used for physical uplink channel transmission of the terminal.

Optionally, the first power headroom includes at least one of the following:
a power headroom determined based on an actual transmission parameter of the second waveform;
a power headroom determined based on a reference transmission parameter of the second waveform;
a power headroom determined based on an actual transmission parameter of the first waveform; and
a power headroom determined based on a reference transmission parameter of the first waveform.

Optionally, the first information is related to at least one of the following parameters:
an MPR corresponding to a target waveform, where the target waveform is the first waveform or the second waveform;
an offset value between an MPR of the second waveform and an MPR of the first waveform;
a modulation and coding scheme MCS configuration associated with the first waveform;
a frequency domain resource allocation FDRA configuration associated with the first waveform;
a power parameter associated with the first waveform, where the power parameter includes a target received power value P₀ or a path loss compensation factor α;
a third parameter corresponding to an actual transmitted physical uplink shared channel PUSCH or sounding reference signal SRS, where the third parameter includes at least one of an MCS, an FDRA, a position of physical resource block PRB, P₀, and an α value; and
a configuration value of a fourth parameter, where the fourth parameter includes at least one of an A-MPR, a P-MPR, and an allowed operating band edge transmission power relaxation ΔTc.

Optionally, the first obtaining module is configured to obtain a first medium access control control element MAC CE; where
in a case that a value of a first reserved bit in the first MAC CE is a first value or a value of a logical channel identifier LCID or enhanced logical channel identifier eLCID corresponding to the first MAC CE is a second value, the first MAC CE is used for transmitting the terminal assistance information.

Optionally, the first MAC CE is an MAC CE for transmitting third information related to a second power headroom corresponding to the second waveform.

Optionally, the first reserved bit is the 2nd bit of a first byte of the first MAC CE.

Optionally, the first obtaining module is configured to obtain a second MAC CE, where the second MAC CE includes N first bytes and M second bytes, N and M being positive integers; where
the first byte is used for transmitting the terminal assistance information, and the second byte is used for transmitting third information related to a second power headroom corresponding to the second waveform.

Optionally, the first obtaining module is configured to obtain a third MAC CE, where the third MAC CE includes the terminal assistance information, and the third MAC CE is an MAC CE dedicated to transmitting the terminal assistance information.

Optionally, the first obtaining module is configured to obtain a fourth MAC CE, where the fourth MAC CE includes P third bytes and Q fourth bytes, P and Q being positive integers; where
the P third bytes are used for transmitting fourth information related to second power headrooms corresponding to second waveforms of a plurality of cells; and
the Q fourth bytes are used for transmitting terminal assistance information of the plurality of cells.

Optionally, Q is determined based on a total length of terminal assistance information of at least one of the cells, or Q is determined based on the number of cells in the plurality of cells.

Optionally, the first obtaining module is configured to obtain a fifth MAC CE, where the fifth MAC CE includes K fifth bytes, L sixth bytes, and one seventh byte, K and L being positive integers; where
the K fifth bytes are used for transmitting fifth information related to second power headrooms corresponding to second waveforms of S cells, and S is a positive integer greater than 1;
the sixth byte is used for transmitting terminal assistance information of T cells, where T≤S and T is a positive integer;
the seventh byte includes a bitmap, and S bits in the bitmap are in one-to-one correspondence to the S cells; and
a value of the bit being a fourth value is used to indicate that the fifth MAC CE includes terminal assistance information of a cell corresponding to the bit, and a value of the bit being a fifth value is used to indicate that the fifth MAC CE does not include the terminal assistance information of the cell corresponding to the bit.

Optionally, the first obtaining module is configured to obtain a sixth MAC CE, where the sixth MAC CE includes F eighth bytes and H ninth bytes, F and H being positive integers; where
the eighth byte is used for transmitting sixth information related to second power headrooms corresponding to second waveforms of a plurality of cells; and
a value of a second reserved bit in the ninth byte being a sixth value is used to indicate that the ninth byte includes terminal assistance information, and the value of the second reserved bit being a seventh value is used to indicate that the ninth byte does not include terminal assistance information.

In this embodiment of the application, the network-side device obtains terminal assistance information related to waveform switching, and based on the terminal assistance information, the network-side device can obtain information such as information related to first power headrooms corresponding to other waveforms than a current transmission waveform. This allows the network-side device, when using different waveforms, to control the terminal based on the assistance information to perform waveform switching, thereby achieving the purpose of reasonably scheduling uplink transmission for the terminal or reasonably controlling an uplink power of the UE. In other words, based on the terminal assistance information, the network-side device can be assisted in achieving proper scheduling of uplink transmission of the terminal or proper control of the uplink power of the terminal, thereby effectively improving transmission performance.

The information transmission apparatus in this embodiment of this application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiments of this application.

The information transmission apparatus provided in this embodiment of this application can implement the processes implemented in the method embodiments in FIG. 4 to FIG. 22, with the same technical effects achieved. To avoid repetition, details are not described herein again.

Optionally, as shown in FIG. 25, an embodiment of this application further provides a communication device 2500, including a processor 2501 and a memory 2502. A program or instructions capable of running on the processor 2501 are stored in the memory 2502. For example, when the communication device 2500 is a terminal and when the program or the instructions are executed by the processor 2501, the steps of the foregoing embodiments of the information transmission method executed by the terminal are implemented, with the same technical effects achieved When the communication device 2500 is a network-side device and when the program or the instructions are executed by the processor 2501, the steps of the foregoing embodiments of the information transmission method executed by the network-side device are implemented, with the same technical effects achieved. To avoid repetition, details are not described herein again.

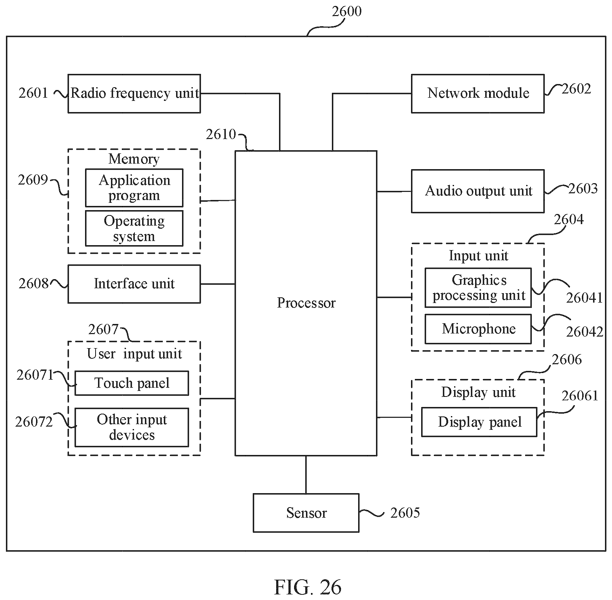

An embodiment of the application further provides a terminal, including a processor and a communication interface, where the communication interface is configured to send terminal assistance information related to waveform switching. The processor is configured to perform waveform switching. The terminal assistance information includes at least one of the following: first information related to a first power headroom corresponding to a first waveform; first delta information, where the first delta information is used to indicate a delta of first parameters corresponding to different waveforms; second delta information, where the second delta information is used to indicate a delta of first parameters corresponding to different modulation schemes of a same waveform, and the first parameter includes at least one of a power headroom PH, a maximum transmit power of the terminal, and a maximum power reduction MPR; a maximum transmit power of the terminal corresponding to the first waveform; information related to a second parameter, where the second parameter includes at least one of an MPR, an additional maximum power reduction A-MPR, and a power management maximum power reduction P-MPR; and second information related to a maximum permissible exposure MPE corresponding to the first waveform; where the first waveform is a waveform other than a second waveform; and the second waveform is a waveform actually used for physical uplink channel transmission of the terminal. The terminal embodiment corresponds to the foregoing terminal side method embodiment, and the implementation processes and implementations of the foregoing method embodiments can be applied to the terminal embodiments, with the same technical effects achieved. Specifically, FIG. 26 is a schematic diagram of a hardware structure of a terminal implementing an embodiment of this application.

The terminal 2600 includes but is not limited to at least part of components such as a radio frequency unit 2601, a network module 2602, an audio output unit 2603, an input unit 2604, a sensor 2605, a display unit 2606, a user input unit 2607, an interface unit 2608, a memory 2609, and a processor 2610.

Persons skilled in the art can understand that the terminal 2600 may further include a power supply (for example, a battery) supplying power to the components, and the power supply may be logically connected to the processor 2610 through a power management system. In this way, functions such as charge management, discharge management, and power consumption management are implemented by using the power management system. The structure of the terminal shown in FIG. 26 does not constitute any limitation on the terminal. The terminal may include more or fewer components than shown in the figure, or a combination of some components, or the components disposed differently. Details are not described herein again.

It should be understood that, in this embodiment of this application, the input unit 2604 may include a graphics processing unit (Graphics Processing Unit, GPU) 26041 and a microphone 26042. The graphics processing unit 26041 processes image data of a static picture or a video that is obtained by an image capture apparatus (for example, a camera) in a video capture mode or an image capture mode. The display unit 2606 may include the display panel 26061. The display panel 26061 may be configured in a form of a liquid crystal display, an organic light-emitting diode, or the like. The user input unit 2607 includes at least one of a touch panel 26071 and other input devices 26072. The touch panel 26071 is also referred to as a touchscreen. The touch panel 26071 may include two parts: a touch detection apparatus and a touch controller. The other input devices 26072 may include but are not limited to a physical keyboard, a function key (such as a volume control key or a power on/off key), a trackball, a mouse, a joystick, and the like. Details are not described herein.

In this embodiment of this application, after receiving downlink data from a network-side device, the radio frequency unit 2601 sends the downlink data to the processor 2610 for processing; and the radio frequency unit 2601 also sends uplink data to the network-side device. Generally, the radio frequency unit 2601 includes, but is not limited to, an antenna, an amplifier, a transceiver, a coupler, a low noise amplifier, a duplexer, and the like.

The memory 2609 may be configured to store software programs or instructions and various data. The memory 2609 may mainly include a first storage area for storing programs or instructions and a second storage area for storing data, where the first storage area may store an operating system, an application program or instructions required by at least one function (for example, an audio playing function and an image playing function), and the like. In addition, the memory 2609 may be a volatile memory or a non-volatile memory, or the memory 2609 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct memory bus random access memory (Direct Rambus RAM, DRRAM). The memory 2609 described in this embodiment this application includes but is not limited to these and any other suitable types of memories.

The processor 2610 may include one or more processing units. Optionally, the processor 2610 integrates an application processor and a modem processor. The application processor mainly processes operations related to an operating system, a user interface, an application program, and the like. The modem processor mainly processes wireless communication signals, for example, a baseband processor. It should be understood that alternatively, the modem processor may not be integrated into the processor 2610.

The radio frequency unit 2601 is configured to send terminal assistance information related to waveform switching.

The processor 2610 is configured to perform the waveform switching.

The terminal assistance information includes at least one of the following:
first information related to a first power headroom corresponding to a first waveform;
first delta information, where the first delta information is used to indicate a delta of first parameters corresponding to different waveforms;
second delta information, where the second delta information is used to indicate a delta of first parameters corresponding to different modulation schemes of a same waveform, and the first parameter includes at least one of a power headroom PH, a maximum transmit power of the terminal, and a maximum power reduction MPR;
a maximum transmit power of the terminal corresponding to the first waveform;
information related to a second parameter, where the second parameter includes at least one of an MPR, an additional maximum power reduction A-MPR, and a power management maximum power reduction P-MPR; and
second information related to a maximum permissible exposure MPE corresponding to the first waveform; where
the first waveform is a waveform other than a second waveform; and the second waveform is a waveform actually used for physical uplink channel transmission of the terminal.

Optionally, the first power headroom includes at least one of the following:
a power headroom determined based on an actual transmission parameter of the second waveform;
a power headroom determined based on a reference transmission parameter of the second waveform;
a power headroom determined based on an actual transmission parameter of the first waveform; and
a power headroom determined based on a reference transmission parameter of the first waveform.

Optionally, the first information is related to at least one of the following parameters:
an MPR corresponding to a target waveform, where the target waveform is the first waveform or the second waveform;
an offset value between an MPR of the second waveform and an MPR of the first waveform;
a modulation and coding scheme MCS configuration associated with the first waveform;
a frequency domain resource allocation FDRA configuration associated with the first waveform;
a power parameter associated with the first waveform, where the power parameter includes a target received power value P₀ or a path loss compensation factor α;
a third parameter corresponding to an actual transmitted physical uplink shared channel PUSCH or sounding reference signal SRS, where the third parameter includes at least one of an MCS, an FDRA, a position of physical resource block PRB, P₀, and an α value; and
a configuration value of a fourth parameter, where the fourth parameter includes at least one of an A-MPR, a P-MPR, and an allowed operating band edge transmission power relaxation ΔTc.

Optionally, the second information includes at least one of the following:
an MPE requirement corresponding to the first waveform; and
a first backoff value, where the first backoff value is a power backoff value required for meeting the MPE requirement of the first waveform.

Optionally, the sending, by a terminal, terminal assistance information related to waveform switching includes:
sending, by the terminal, a first medium access control control element MAC CE, where in a case that a value of a first reserved bit in the first MAC CE is a first value or a value of a logical channel identifier LCID or enhanced logical channel identifier eLCID corresponding to the first MAC CE is a second value, the first MAC CE is used for transmitting the terminal assistance information.

Optionally, the first MAC CE is an MAC CE for transmitting third information related to a second power headroom corresponding to the second waveform.

Optionally, the first reserved bit is the 2nd bit of a first byte of the first MAC CE.

Optionally, the radio frequency unit is further configured to send a second MAC CE, where the second MAC CE includes N first bytes and M second bytes, N and M being positive integers; where
the first byte is used for transmitting the terminal assistance information, and the second byte is used for transmitting third information related to a second power headroom corresponding to the second waveform.

Optionally, the radio frequency unit is further configured to send a third MAC CE, where the third MAC CE includes the terminal assistance information, and the third MAC CE is an MAC CE dedicated to transmitting the terminal assistance information.

Optionally, the radio frequency unit is further configured to send a fourth MAC CE, where the fourth MAC CE includes P third bytes and Q fourth bytes, P and Q being positive integers; where
the P third bytes are used for transmitting fourth information related to second power headrooms corresponding to second waveforms of a plurality of cells; and
the Q fourth bytes are used for transmitting terminal assistance information of the plurality of cells.

Optionally, Q is determined based on a total length of the terminal assistance information of the plurality of cells, or Q is determined based on the number of cells in the plurality of cells.

Optionally, the radio frequency unit is further configured to send a fifth MAC CE, where the fifth MAC CE includes K fifth bytes, L sixth bytes, and one seventh byte, K and L being positive integers; where
the K fifth bytes are used for transmitting fifth information related to second power headrooms corresponding to second waveforms of S cells, and S is a positive integer greater than 1;
the sixth byte is used for transmitting terminal assistance information of T cells, where T≤S and T is a positive integer;
the seventh byte includes a bitmap, and S bits in the bitmap are in one-to-one correspondence to the S cells; and
a value of the bit being a fourth value is used to indicate that the fifth MAC CE includes terminal assistance information of a cell corresponding to the bit, and a value of the bit being a fifth value is used to indicate that the fifth MAC CE does not include the terminal assistance information of the cell corresponding to the bit.

Optionally, the radio frequency unit is further configured to send a sixth MAC CE, where the sixth MAC CE includes F eighth bytes and H ninth bytes, F and H being positive integers; where
the eighth byte is used for transmitting sixth information related to second power headrooms corresponding to second waveforms of a plurality of cells; and
a value of a second reserved bit in the ninth byte being a sixth value is used to indicate that the ninth byte includes terminal assistance information, and the value of the second reserved bit being a seventh value is used to indicate that the ninth byte does not include terminal assistance information.

In this embodiment of the application, the terminal sends terminal assistance information related to waveform switching; and the terminal performs waveform switching; where the terminal assistance information includes at least one of the following: first information related to a first power headroom corresponding to a first waveform; first delta information, where the first delta information is used to indicate a delta of first parameters corresponding to different waveforms; second delta information, where the second delta information is used to indicate a delta of first parameters corresponding to different modulation schemes of a same waveform, and the first parameter includes at least one of a power headroom PH, a maximum transmit power of the terminal, and a maximum power reduction MPR; a maximum transmit power of the terminal corresponding to the first waveform; information related to a second parameter, where the second parameter includes at least one of an MPR, an additional maximum power reduction A-MPR, and a power management maximum power reduction P-MPR; and second information related to a maximum permissible exposure MPE corresponding to the first waveform; where the first waveform is a waveform other than a second waveform; and the second waveform is a waveform actually used for physical uplink channel transmission of the terminal. That is, in the embodiments of this application, the terminal provides the network-side device with information such as the information related to the first power headroom corresponding to the first waveform, which is a waveform other than the one actually used for physical uplink channel transmission, enabling the network-side device to obtain information related to waveforms other than the currently used transmission waveform. This allows the network-side device, when using different waveforms, to control the terminal based on the assistance information to perform waveform switching, thereby achieving the purpose of reasonably scheduling uplink transmission for the terminal or reasonably controlling an uplink power of the UE. In other words, based on the terminal assistance information, the network-side device can be assisted in achieving proper scheduling of uplink transmission of the terminal or proper control of the uplink power of the terminal, thereby effectively improving transmission performance.

An embodiment of the application further provides a network-side device, including a processor and a communication interface, where the communication interface is configured to obtain terminal assistance information related to waveform switching. The processor is configured to control a terminal based on the terminal assistance information to perform waveform switching. The terminal assistance information includes at least one of the following: first information related to a first power headroom corresponding to a first waveform; first delta information, where the first delta information is used to indicate a delta of first parameters corresponding to different waveforms; second delta information, where the second delta information is used to indicate a delta of first parameters corresponding to different modulation schemes of a same waveform, and the first parameter includes at least one of a power headroom PH, a maximum transmit power of the terminal, and a maximum power reduction MPR; a maximum transmit power of the terminal corresponding to the first waveform; information related to a second parameter, where the second parameter includes at least one of an MPR, an additional maximum power reduction A-MPR, and a power management maximum power reduction P-MPR; and second information related to a maximum permissible exposure MPE corresponding to the first waveform; where the first waveform is a waveform other than a second waveform; and the second waveform is a waveform actually used for physical uplink channel transmission of the terminal. The network-side device embodiment corresponds to the foregoing network-side device method embodiment, and the implementation processes and implementations of the foregoing method embodiments may be applied to the network-side device embodiments, with the same technical effects achieved.

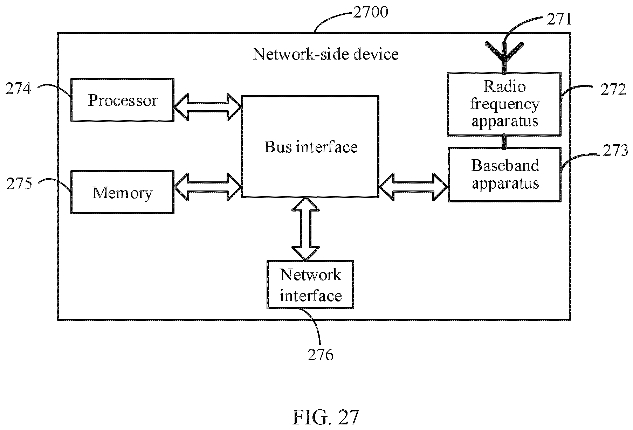

Specifically, an embodiment of this application further provides a network-side device. As shown in FIG. 27, the network-side device 2700 includes an antenna 271, a radio frequency apparatus 272, a baseband apparatus 273, a processor 274, and a memory 275. The antenna 271 is connected to the radio frequency apparatus 272. In an uplink direction, the radio frequency apparatus 272 receives information by using the antenna 271, and sends the received information to the baseband apparatus 273 for processing. In a downlink direction, the baseband apparatus 273 processes to-be-sent information, and sends the information to the radio frequency apparatus 272; and the radio frequency apparatus 272 processes the received information and then sends the information out by using the antenna 271.

The method performed by the network-side device in the foregoing embodiment may be implemented in the baseband apparatus 273, and the baseband apparatus 273 includes a baseband processor.

The baseband apparatus 273 may include, for example, at least one baseband processing unit, where a plurality of chips are disposed on the baseband processing unit. As shown in FIG. 27, one of the chips is, for example, the baseband processor, and connected to the memory 275 through a bus interface, to invoke the program in the memory 275 to perform the operations of the network device shown in the foregoing method embodiment.

The network-side device may further include a network interface 276, where the interface is, for example, a common public radio interface (common public radio interface, CPRI).

Specifically, the network-side device 2700 according to this embodiment of this application further includes instructions or programs stored in the memory 275 and capable of running on the processor 274, and the processor 274 calls the instructions or programs in the memory 275 to execute the methods performed by the modules shown in FIG. 24, with the same technical effects achieved. To avoid repetition, details are not described herein again.

An embodiment of this application further provides a readable storage medium. The readable storage medium stores a program or instructions. When the program or instructions are executed by a processor, each process of the foregoing embodiment of the information transmission method is implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the embodiment of the information transmission method, with the same technical effects achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and when being executed by at least one processor, the computer program/program product is configured to implement the processes of the foregoing embodiments of the information transmission method, with the same technical effects achieved. To avoid repetition, details are not repeated herein.

An embodiment of this application further provides an information transmission system, including a terminal and a network-side device, where the terminal can be configured to execute the steps of the information transmission method performed by the terminal, and the network-side device can be configured to execute the steps of the information transmission method performed by the network-side device.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially or the part contributing to the related art may be implemented in a form of a computer software product. The computer software product may be stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in each embodiment of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. An information transmission method, comprising:
sending, by a terminal, terminal assistance information related to waveform switching; and
performing, by the terminal, the waveform switching; wherein
the terminal assistance information comprises at least one of the following:
first information related to a first power headroom corresponding to a first waveform;
first delta information, wherein the first delta information is used to indicate a delta of first parameters corresponding to different waveforms;
second delta information, wherein the second delta information is used to indicate a delta of first parameters corresponding to different modulation schemes of a same waveform, and the first parameter comprises at least one of a power headroom PH, a maximum transmit power of the terminal, and a maximum power reduction MPR;
a maximum transmit power of the terminal corresponding to the first waveform;
information related to a second parameter, wherein the second parameter comprises at least one of an MPR, an additional maximum power reduction A-MPR, and a power management maximum power reduction P-MPR; and
second information related to a maximum permissible exposure MPE corresponding to the first waveform; wherein
the first waveform is a waveform other than a second waveform; and the second waveform is a waveform actually used for physical uplink channel transmission of the terminal.

2. The method according to claim 1, wherein the first power headroom comprises at least one of the following:
a power headroom determined based on an actual transmission parameter of the second waveform;
a power headroom determined based on a reference transmission parameter of the second waveform;
a power headroom determined based on an actual transmission parameter of the first waveform; and
a power headroom determined based on a reference transmission parameter of the first waveform.

3. The method according to claim 1 or 2, wherein the first information is related to at least one of the following parameters:
an MPR corresponding to a target waveform, wherein the target waveform is the first waveform or the second waveform;
an offset value between an MPR of the second waveform and an MPR of the first waveform;
a modulation and coding scheme MCS configuration associated with the first waveform;
a frequency domain resource allocation FDRA configuration associated with the first waveform;
a power parameter associated with the first waveform, wherein the power parameter comprises a target received power value P₀ or a path loss compensation factor α;
a third parameter corresponding to an actual transmitted physical uplink shared channel PUSCH or sounding reference signal SRS, wherein the third parameter comprises at least one of an MCS, an FDRA, a position of physical resource block PRB, P₀, and an α value; and
a configuration value of a fourth parameter, wherein the fourth parameter comprises at least one of an A-MPR, a P-MPR, and an allowed operating band edge transmission power relaxation ΔT_{C}.

4. The method according to claim 1, wherein the second information comprises at least one of the following:
an MPE requirement corresponding to the first waveform; and
a first backoff value, wherein the first backoff value is a power backoff value required for meeting the MPE requirement of the first waveform.

5. The method according to claim 1, wherein the sending, by a terminal, terminal assistance information related to waveform switching comprises:
sending, by the terminal, a first medium access control control element MAC CE, wherein in a case that a value of a first reserved bit in the first MAC CE is a first value or a value of a logical channel identifier LCID or enhanced logical channel identifier eLCID corresponding to the first MAC CE is a second value, the first MAC CE is used for transmitting the terminal assistance information.

6. The method according to claim 5, wherein the first MAC CE is an MAC CE for transmitting third information related to a second power headroom corresponding to the second waveform.

7. The method according to claim 6, wherein the first reserved bit is the 2nd bit of a first byte of the first MAC CE.

8. The method according to claim 1, wherein the sending, by a terminal, terminal assistance information related to waveform switching comprises:
sending, by the terminal, a second MAC CE, wherein the second MAC CE comprises N first bytes and M second bytes, N and M being positive integers; wherein
the first byte is used for transmitting the terminal assistance information, and the second byte is used for transmitting third information related to a second power headroom corresponding to the second waveform.

9. The method according to claim 1, wherein the sending, by a terminal, terminal assistance information comprises:
sending, by the terminal, a third MAC CE, wherein the third MAC CE comprises the terminal assistance information, and the third MAC CE is an MAC CE dedicated to transmitting the terminal assistance information.

10. The method according to claim 1, wherein the sending, by a terminal, terminal assistance information related to waveform switching comprises:
sending, by the terminal, a fourth MAC CE, wherein the fourth MAC CE comprises P third bytes and Q fourth bytes, P and Q being positive integers; wherein
the P third bytes are used for transmitting fourth information related to second power headrooms corresponding to second waveforms of a plurality of cells; and
the Q fourth bytes are used for transmitting terminal assistance information of the plurality of cells.

11. The method according to claim 10, wherein Q is determined based on a total length of the terminal assistance information of the plurality of cells, or Q is determined based on the number of cells in the plurality of cells.

12. The method according to claim 1, wherein the sending, by a terminal, terminal assistance information related to waveform switching comprises:
sending, by the terminal, a fifth MAC CE, wherein the fifth MAC CE comprises K fifth bytes, L sixth bytes, and one seventh byte, K and L being positive integers; wherein
the K fifth bytes are used for transmitting fifth information related to second power headrooms corresponding to second waveforms of S cells, and S is a positive integer greater than 1;
the sixth byte is used for transmitting terminal assistance information of T cells, wherein T≤S and T is a positive integer;
the seventh byte comprises a bitmap, and S bits in the bitmap are in one-to-one correspondence to the S cells; and
a value of the bit being a fourth value is used to indicate that the fifth MAC CE comprises terminal assistance information of a cell corresponding to the bit, and a value of the bit being a fifth value is used to indicate that the fifth MAC CE does not comprise the terminal assistance information of the cell corresponding to the bit.

13. The method according to claim 1, wherein the sending, by a terminal, terminal assistance information related to waveform switching comprises:
sending, by the terminal, a sixth MAC CE, wherein the sixth MAC CE comprises F eighth bytes and H ninth bytes, F and H being positive integers; wherein
the eighth byte is used for transmitting sixth information related to second power headrooms corresponding to second waveforms of a plurality of cells; and
a value of a second reserved bit in the ninth byte being a sixth value is used to indicate that the ninth byte comprises terminal assistance information, and the value of the second reserved bit being a seventh value is used to indicate that the ninth byte does not comprise terminal assistance information.

14. An information transmission method, comprising:
obtaining, by a network-side device, terminal assistance information related to waveform switching; and
controlling, by the network-side device, the terminal based on the terminal assistance information to perform waveform switching; wherein
the terminal assistance information comprises at least one of the following:
first information related to a first power headroom corresponding to a first waveform;
first delta information, wherein the first delta information is used to indicate a delta of first parameters corresponding to different waveforms;
second delta information, wherein the second delta information is used to indicate a delta of first parameters corresponding to different modulation schemes of a same waveform, and the first parameter comprises at least one of a power headroom PH, a maximum transmit power of the terminal, and a maximum power reduction MPR;
a maximum transmit power of the terminal corresponding to the first waveform;
information related to a second parameter, wherein the second parameter comprises at least one of an MPR, an additional maximum power reduction A-MPR, and a power management maximum power reduction P-MPR; and
second information related to a maximum permissible exposure MPE corresponding to the first waveform; wherein
the first waveform is a waveform other than a second waveform; and the second waveform is a waveform actually used for physical uplink channel transmission of the terminal.

15. The method according to claim 14, wherein the first power headroom comprises at least one of the following:
a power headroom determined based on an actual transmission parameter of the second waveform;
a power headroom determined based on a reference transmission parameter of the second waveform;
a power headroom determined based on an actual transmission parameter of the first waveform; and
a power headroom determined based on a reference transmission parameter of the first waveform.

16. The method according to claim 14 or 15, wherein the first information is related to at least one of the following parameters:
an MPR corresponding to a target waveform, wherein the target waveform is the first waveform or the second waveform;
an offset value between an MPR of the second waveform and an MPR of the first waveform;
a modulation and coding scheme MCS configuration associated with the first waveform;
a frequency domain resource allocation FDRA configuration associated with the first waveform;
a power parameter associated with the first waveform, wherein the power parameter comprises a target received power value P₀ or a path loss compensation factor α;
a third parameter corresponding to an actual transmitted physical uplink shared channel PUSCH or sounding reference signal SRS, wherein the third parameter comprises at least one of an MCS, an FDRA, a position of physical resource block PRB, P₀, and an α value; and
a configuration value of a fourth parameter, wherein the fourth parameter comprises at least one of an A-MPR, a P-MPR, and an allowed operating band edge transmission power relaxation ΔT_{C}.

17. The method according to claim 14, wherein the obtaining, by a network-side device, terminal assistance information related to waveform switching comprises:
obtaining, by the network-side device, a first medium access control control element MAC CE; wherein
in a case that a value of a first reserved bit in the first MAC CE is a first value or a value of a logical channel identifier LCID or enhanced logical channel identifier eLCID corresponding to the first MAC CE is a second value, the first MAC CE is used for transmitting the terminal assistance information.

18. The method according to claim 17, wherein the first MAC CE is an MAC CE for transmitting information related to a second power headroom corresponding to the second waveform.

19. The method according to claim 18, wherein the first reserved bit is the 2nd bit of a first byte of the first MAC CE.

20. The method according to claim 14, wherein the obtaining, by a network-side device, terminal assistance information related to waveform switching comprises:
obtaining, by the network-side device, a second MAC CE, wherein the second MAC CE comprises N first bytes and M second bytes, N and M being positive integers; wherein
the first byte is used for transmitting the terminal assistance information, and the second byte is used for transmitting third information related to a second power headroom corresponding to the second waveform.

21. The method according to claim 14, wherein the obtaining, by a network-side device, terminal assistance information related to waveform switching comprises:
obtaining, by the network-side device, a third MAC CE, wherein the third MAC CE comprises the terminal assistance information, and the third MAC CE is an MAC CE dedicated to transmitting the terminal assistance information.

22. The method according to claim 14, wherein the obtaining, by a network-side device, terminal assistance information related to waveform switching comprises:
obtaining, by the network-side device, a fourth MAC CE, wherein the fourth MAC CE comprises P third bytes and Q fourth bytes, P and Q being positive integers; wherein
the P third bytes are used for transmitting fourth information related to second power headrooms corresponding to second waveforms of a plurality of cells; and
the Q fourth bytes are used for transmitting terminal assistance information of the plurality of cells.

23. The method according to claim 22, wherein Q is determined based on a total length of terminal assistance information of at least one of the cells, or Q is determined based on the number of cells in the plurality of cells.

24. The method according to claim 14, wherein the obtaining, by a network-side device, terminal assistance information related to waveform switching comprises:
obtaining, by the network-side device, a fifth MAC CE, wherein the fifth MAC CE comprises K fifth bytes, L sixth bytes, and one seventh byte, K and L being positive integers; wherein
the K fifth bytes are used for transmitting fifth information related to second power headrooms corresponding to second waveforms of S cells, and S is a positive integer greater than 1;
the sixth byte is used for transmitting terminal assistance information of T cells, wherein T≤S and T is a positive integer;
the seventh byte comprises a bitmap, and S bits in the bitmap are in one-to-one correspondence to the S cells; and
a value of the bit being a fourth value is used to indicate that the fifth MAC CE comprises terminal assistance information of a cell corresponding to the bit, and a value of the bit being a fifth value is used to indicate that the fifth MAC CE does not comprise the terminal assistance information of the cell corresponding to the bit.

25. The method according to claim 14, wherein the obtaining, by a network-side device, terminal assistance information related to waveform switching comprises:
obtaining, by the network-side device, a sixth MAC CE, wherein the sixth MAC CE comprises F eighth bytes and H ninth bytes, F and H being positive integers; wherein
the eighth byte is used for transmitting sixth information related to second power headrooms corresponding to second waveforms of a plurality of cells; and
a value of a second reserved bit in the ninth byte being a sixth value is used to indicate that the ninth byte comprises terminal assistance information, and the value of the second reserved bit being a seventh value is used to indicate that the ninth byte does not comprise terminal assistance information.

26. An information transmission apparatus, applied to a terminal and comprising:
a first sending module, configured to send terminal assistance information related to waveform switching; and
a first execution module, configured to perform waveform switching; wherein
the terminal assistance information comprises at least one of the following:
first information related to a first power headroom corresponding to a first waveform;
first delta information, wherein the first delta information is used to indicate a delta of first parameters corresponding to different waveforms;
second delta information, wherein the second delta information is used to indicate a delta of first parameters corresponding to different modulation schemes of a same waveform, and the first parameter comprises at least one of a power headroom PH, a maximum transmit power of the terminal, and a maximum power reduction MPR;
a maximum transmit power of the terminal corresponding to the first waveform;
information related to a second parameter, wherein the second parameter comprises at least one of an MPR, an additional maximum power reduction A-MPR, and a power management maximum power reduction P-MPR; and
second information related to a maximum permissible exposure MPE corresponding to the first waveform; wherein
the first waveform is a waveform other than a second waveform; and the second waveform is a waveform actually used for physical uplink channel transmission of the terminal.

27. An information transmission apparatus, applied to a network-side device and comprising:
a first obtaining module, configured to obtain terminal assistance information related to waveform switching; and
a second execution module, configured to control the terminal based on the terminal assistance information to perform waveform switching; wherein
the terminal assistance information comprises at least one of the following:
first information related to a first power headroom corresponding to a first waveform;
first delta information, wherein the first delta information is used to indicate a delta of first parameters corresponding to different waveforms;
second delta information, wherein the second delta information is used to indicate a delta of first parameters corresponding to different modulation schemes of a same waveform, and the first parameter comprises at least one of a power headroom PH, a maximum transmit power of the terminal, and a maximum power reduction MPR;
a maximum transmit power of the terminal corresponding to the first waveform;
information related to a second parameter, wherein the second parameter comprises at least one of an MPR, an additional maximum power reduction A-MPR, and a power management maximum power reduction P-MPR; and
second information related to a maximum permissible exposure MPE corresponding to the first waveform; wherein
the first waveform is a waveform other than a second waveform; and the second waveform is a waveform actually used for physical uplink channel transmission of the terminal.

28. A terminal, comprising a processor and a memory, wherein the memory stores a program or instructions capable of running on the processor, and when the program or instructions are executed by the processor, the steps of the information transmission method according to any one of claims 1 to 13 are implemented.

29. A network-side device, comprising a processor and a memory, wherein the memory stores a program or instructions capable of running on the processor, and when the program or instructions are executed by the processor, the steps of the information transmission method according to any one of claims 14 to 25 are implemented.

30. A readable storage medium, wherein the readable storage medium stores a program or instructions, and when the program or instructions are executed by a processor, the steps of the information transmission method according to any one of claims 1 to 13 are implemented, or the steps of the information transmission method according to any one of claims 14 to 25 are implemented.
